# EUROPEAN PATENT SPECIFICATION

(11) **EP 4 493 659 B1**
(45) Date of publication and mention of the grant of the patent: **05.11.2025**
(21) Application number: 23828216.4
(22) Date of filing: 14.12.2023
(51) Int. Cl.: C10M 169/04

(54) **MULTIPURPOSE OIL AND METHOD FOR PRODUCING THE SAME**
MEHRZWECKÖL UND VERFAHREN FÜR DESSEN HERSTELLUNG
HUILE DE UTILISATION POLYVALENTE ET UNE MÉTHODE POUR LA PREPARATION

(30) Priority: 31.05.2023 FI 20235608
(43) Date of publication of application: 22.01.2025
(73) Proprietor: Neste Oyj, 02150 Espoo (FI)
(72) Inventor: THOMAS, David, 06101 Porvoo (FI); HARTIKAINEN, Jukka, 06101 Porvoo (FI); KARTTUNEN, Jouni, 06101 Porvoo (FI); VIRTANEN, Jorma, 06101 Porvoo (FI)
(74) Representative: Espatent Oy
(86) International application number: PCT/FI2023/050692
(87) International publication number: WO 2024/246411

(56) References cited:
- WO-A1-2020/249846
- US-A1- 2018 148 656
- DATABASE WPI Week 2021076, 2021 Derwent World Patents Index; AN 2021-93878X, XP002811030

## Description

### TECHNICAL FIELD

The present invention generally relates to multipurpose oils. The invention relates particularly, though not exclusively, to a multipurpose oil comprising a renewable hydrocarbon base stock and an anionic surfactant composition, to a method for producing said multipurpose oil, and to use of said multipurpose oil.

### BACKGROUND

This section illustrates useful background information without admission of any technique described herein representative of the state of the art.

Multipurpose oils are generally based on oils of fossil origin. Multipurpose oils should be able to penetrate between surfaces that are in close contact with each other, such as threaded metal parts, hinges, locks, or pipe fittings, and to loosen surfaces that have become stuck together for example due to rusting. Conventional multipurpose oils are often rather volatile and even flammable, which may cause safety and health concerns and impair the performance of the multipurpose oils due to too quick evaporation. Because multipurpose oils are generally applied directly on the surfaces in close contact with each other or the surfaces being stuck together, it is very likely that at least a portion of the applied oil will end up in the environment, typically by evaporation and/or dripping. Conventional multipurpose oils are generally not renewable nor biodegradable and therefore their use may pose environmental concerns.

CN113214886A discloses a metal freezing loosening agent comprising a first isoparaffin solvent and a second isoparaffin solvent, wintergreen oil, rust inhibitor, emulsifier, and propellant.

There thus exists a need to provide safer and more environmentally friendly and sustainable multipurpose oils with good performance characteristics.

### SUMMARY

According to a first example aspect, there is provided a multipurpose oil comprising, based on the total volume of the multipurpose oil,
80.0-99.5 vol-%, preferably 85.0-99.0 vol-%, more preferably 87.0-98.5 vol-% of a renewable hydrocarbon base stock, and
0.5-20.0 vol-%, preferably 1.0-15.0 vol-%, more preferably 1.5-13.0 vol-% of an anionic surfactant composition, preferably comprising at least one or more anionic aromatic surfactant(s), more preferably anionic aromatic surfactant(s) containing mono- and/or di-alkaryl group(s),
wherein the renewable hydrocarbon base stock comprises, based on the total weight of the renewable hydrocarbon base stock, more than 50 wt-% of C14-C20 hydrocarbons and at least 90 wt-% of paraffins, of which paraffins at least 70 wt-% are isoparaffins, and
wherein the renewable hydrocarbon base stock has a biogenic carbon content of more than 80 wt-%, based on the total weight of carbon in the hydrocarbon base stock (EN 16640 (2017)).

Surprisingly, the present inventors have found that a multipurpose oil according to the first example aspect has excellent anticorrosion, water displacement, and penetration performance, as well as good lubricating properties, as shown in the present experimental Examples. While e.g. the commercially available multipurpose oil WD-40 exhibited excellent anticorrosion, water displacement, and lubricity performance, merely multipurpose oils according to the present disclosure were able to combine these properties with excellent penetration performance, ensuring that the anticorrosion, water displacement, and lubricity effect reach not just the easily accessible open surfaces, but also hard to reach crevices.

Additionally, the high content of C14-C20 hydrocarbons in the principal constituent of the present multipurpose oil, i.e. the renewable hydrocarbon base stock, helps to control the flash point and the volatility of the multipurpose oil, improving safety and relaxing ventilation efficiency requirements at the place of use and storage of the multipurpose oil. These properties relate also to the rate of drying when multipurpose oil is applied on surfaces, and may therefor contribute beneficially to at least some of the performance characteristics of the multipurpose oil. The content of C14-C20 hydrocarbons, in combination with high isoparaffins content, contributes beneficially also to the fluidity of the multipurpose oil, as reflected by kinematic viscosity at 20 °C. Here a lower value is not necessarily better, as typically the surfaces to be treated with a multipurpose oil are not flat, horizontal surfaces. A somewhat elevated kinematic viscosity may be helpful to prevent the multipurpose oil from running and dripping off, allowing the oil to remain longer on the treated surface and hence to further improve the performance characteristics.

As the principal constituent of the present multipurpose oil, i.e. the renewable hydrocarbon base stock, is bio-based and may also be readily biodegradable thanks to its high paraffins content, also the environmental safety of the present multipurpose oil may be improved.

Additionally, as the principal constituent of the present multipurpose oil, i.e. the renewable hydrocarbon base stock, is highly isoparaffinic comprising at least 70 wt-% isoparaffins, based on the total weight of paraffins in the base stock, also the cold performance of the multipurpose oil may be improved. The cold performance of the multipurpose oil refers herein to satisfactory anticorrosion, water displacement, penetration, and lubricating performance at low ambient temperatures, such as 0°C or colder, for example -10 °C or colder, or even -20 °C or colder. The temperature of use of the multipurpose oil may be within a range from -20 °C to 45 °C, such as from -10 °C to 40 °C.

In the experimental Examples of the present disclosure, it was surprisingly found that the combination of excellent anticorrosion, water displacement, and penetration performance, as well as good lubricating properties were provided by the present multipurpose oils but not by otherwise similar comparison compositions containing a hydrocarbon-based rust inhibitor instead of the anionic surfactant composition. The present multipurpose oils outperformed these otherwise similar comparison compositions particularly in a neutral salt spray (NSS) corrosion protection test according to EN ISO 9227:2017 and in an anticorrosion performance test at high humidity conditions according to ASTM D1748-10:2015. In other words, the present multipurpose oil surprisingly outperformed compositions containing a commercially available component specifically intended to inhibit rusting. Without wishing to be bound to a theory, it is believed that the highly isoparaffinic renewable hydrocarbon base stock and the anionic surfactant composition provide a synergistic effect.

According to a second example aspect there is provided a method for producing a multipurpose oil comprising:
mixing a renewable hydrocarbon base stock having a biogenic carbon content of more than 80 wt-%, based on the total weight of carbon in the hydrocarbon base stock (EN 16640 (2017)), and comprising, based on the total weight of the renewable hydrocarbon base stock, more than 50 wt-% of C14-C20 hydrocarbons and at least 90 wt-% of paraffins, of which paraffins at least 70 wt-% are isoparaffins; and an anionic surfactant composition, preferably comprising at least one or more aromatic anionic surfactant(s), more preferably anionic aromatic surfactant(s) containing mono- and/or di-alkaryl group(s); to form a multipurpose oil comprising, based on the total volume of the multipurpose oil, 80.0-99.5 vol-%, preferably 85.0-99.0 vol-%, more preferably 87.0-98.5 vol-% of the renewable hydrocarbon base stock, and 0.5-20.0 vol-%, preferably 1.0-15.0 vol-%, more preferably 1.5-13.0 vol-% of the anionic surfactant composition.

According to a third example aspect there is provided use of a multipurpose oil according to the first example aspect, or obtainable by a method according to the second example aspect, for at least two or more, preferably three or more, of anticorrosion, penetration, lubrication, water displacement, and/or cleaning, said cleaning preferably comprising at least one or more of rust removal, dirt removal, tar removal, and/or degreasing.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### DETAILED DESCRIPTION

All standards and guidelines referred to herein are the latest revisions available at the filing date, unless otherwise mentioned.

Base stocks are key building blocks of lubricants, greases, and similar formulations. As used herein, base stock refers to a single component of a formulation, which single component is typically produced by a single manufacturer. In this respect base stock differs e.g. from a base oil which may be a mixture of one or more base stocks.

As used herein, the term renewable refers to compounds or compositions that are obtainable, derivable, or originating from plants and/or animals, including compounds or compositions obtainable, derivable, or originating from fungi and/or algae, in full or in part. As used herein, renewable compounds or compositions may comprise gene manipulated compounds or compositions. Renewable compounds or compositions may also be referred to as biological, bio-based, or biogenic compounds or compositions.

As used herein, the term fossil or mineral refers to compounds or compositions that are obtainable, derivable, or originating from naturally occurring non-renewable compositions, such as crude oil, petroleum oil/gas, shale oil/gas, natural gas, or coal deposits, and the like, and combinations thereof, including any hydrocarbon-rich deposits that can be utilized from ground/underground sources. The term circular refers to recycled material typically originating from non-renewable sources. For example, the term circular may refer to recycled material originating from waste plastics.

Said renewable, circular, and fossil compositions are considered differing from one another based on their origin and impact on environmental issues. Therefore, they may be treated differently under legislation and regulatory framework. Typically, renewable, circular, and fossil compositions are differentiated based on their origin and information thereof provided by the producer.

Chemically the renewable or fossil origin of any organic compounds, including hydrocarbons, can be determined by suitable method for analyzing the content of carbon from renewable sources e.g. DIN 51637 (2014), ASTM D6866 (2020), or EN 16640 (2017). Said methods are based on the fact that carbon atoms of renewable or biological origin comprise a higher number of unstable radiocarbon (¹⁴C) atoms compared to carbon atoms of fossil origin. Therefore, it is possible to distinguish between carbon compounds derived from renewable or biological sources or raw material and carbon compounds derived from non-renewable or fossil sources or raw material by analyzing the ratio of ¹²C and ¹⁴C isotopes. Thus, a particular ratio of said isotopes can be used as a "tag" to identify a renewable carbon compound and differentiate it from non-renewable carbon compounds. The isotope ratio does not change in the course of chemical reactions. Therefore, the isotope ratio can be used for identifying renewable compounds and compositions and distinguishing them from non-renewable, fossil materials in reactor feeds, reactor effluents, separated product fractions and various mixtures thereof. Numerically, the biogenic carbon content can be expressed as the amount of biogenic carbon in the material as a weight percent of the total carbon (TC) in the material (in accordance with ASTM D6866 (2020) or EN 16640 (2017)). In the present context, the term renewable refers to a material having a high biogenic carbon content, typically more than 80 wt-%, preferably more than 85 wt-%, more preferably more than 90 wt-% or more than 95 wt-%, even more preferably about 100 wt-%, based on the total weight of carbon in the material (EN 16640 (2017)).

As used herein hydrocarbons refer to compounds consisting of carbon and hydrogen, and comprise e.g. paraffins, n-paraffins, isoparaffins (monobranched and/or multiple-branched isoparaffins), olefins, naphthenes, and aromatic hydrocarbons. Oxygenated hydrocarbons refer herein to hydrocarbons comprising covalently bound oxygen.

In the context of the present disclosure, <C14 hydrocarbons refer to hydrocarbons having a carbon number smaller than C14, i.e. to hydrocarbons having carbon numbers C13 and below. Similarly, <C11 hydrocarbons refer to hydrocarbons having a carbon number smaller than C11, i.e. to hydrocarbons having carbon numbers C10 and below.

In the context of the present disclosure, >C20 hydrocarbons refer to hydrocarbons having a carbon number higher than C20, i.e. to hydrocarbons having carbon numbers C21 and above.

As used herein paraffins refer to non-cyclic alkanes, i.e. non-cyclic, open chain saturated hydrocarbons that are linear (normal paraffins, n-paraffins) or branched (isoparaffins, i-paraffins). In other words, paraffins refer herein to n-paraffins and/or isoparaffins.

In the context of the present disclosure, isoparaffins refer to branched open chain alkanes, i.e. non-cyclic, open chain saturated hydrocarbons having one or more alkyl side chains. Herein, isoparaffins having one alkyl side chain or branch are referred to as monobranched isoparaffins and isoparaffins having two or more alkyl side chains or branches are herein referred to as multiple-branched isoparaffins. In other words, isoparaffins refer herein to monobranched isoparaffins and/or multiple-branched isoparaffins. The alkyl side chain(s) may for example be C1-C9 alkyl side chain(s), preferably methyl side chain(s). The amounts of monobranched and multiple-branched isoparaffins may be given separately. The term "isoparaffins" refers to sum amount of any monobranched isoparaffins and multiple-branched isoparaffins, if present, indicating the total amount of any isoparaffins present regardless the number of branches. Correspondingly, "paraffins" refers to sum amount of any n-paraffins, any monobranched isoparaffins, and any multiple-branched isoparaffins, if present.

In the context of the present disclosure, olefins refer to unsaturated linear, branched, or cyclic hydrocarbons, excluding aromatic compounds. In other words, olefins refer to hydrocarbons having at least one unsaturated bond, excluding unsaturated bonds in aromatic rings.

As used herein, cyclic hydrocarbons refer to all hydrocarbons containing cyclic structure(s), including cyclic olefins, naphthenes, and aromatic hydrocarbons. Naphthenes refer herein to cycloalkanes i.e. saturated hydrocarbons containing at least one cyclic structure, with or without side chains. As naphthenes are saturated compounds, they are compounds without aromatic ring structure(s) present. Aromatic hydrocarbons refer herein to hydrocarbons containing at least one aromatic ring structure, i.e. cyclic structure having delocalized, alternating π bonds all the way around said cyclic structure.

In the context of the present disclosure, for compositions boiling at 36 °C or higher (at standard atmospheric pressure), contents of n-paraffins, isoparaffins, monobranched isoparaffins, various multiple-branched isoparaffins, naphthenes, and aromatic hydrocarbons, are expressed as weight-% (wt-%) relative to the weight of the base stock, effluent, product, or sample in question, or, when so defined, as weight-% (wt-%) relative to the (total) weight of paraffins or (total) weight of isoparaffins of the hydrocarbon base stock, effluent, product, component, or sample in question. Said contents may be determined by GCxGC-FID/GCxGC-MS method, preferably conducted as follows: GCxGC (2D GC) method was run as generally disclosed in UOP 990-2011 and by Nousiainen M. in the experimental section of his Master's Thesis Comprehensive two-dimensional gas chromatography with mass spectrometric and flame ionization detectors in petroleum chemistry, University of Helsinki, August 2017, with the following modifications. The GCxGC was run in reverse mode, using a semipolar column (Rxi17Sil) first and a non-polar column (Rxi5Sil) thereafter, followed by FID detector, using run parameters: carrier gas helium 31.7 cm/sec (column flow at 40 °C 1.60 ml/min); split ratio 1:350; injector 280 °C; Column T program 40 °C (0 min) - 5 °C/min - 250 °C (0 min) - 10 °C/min - 300 °C (5 min), run time 52 min; modulation period 10 sec; detector 300 °C with H₂ 40 ml/min and air 400 ml/min; makeup flow helium 30 ml/min; sampling rate 250 Hz and injection size 0.2 microliters. Individual compounds were identified using GCxGC-MS, with MS-parameters: ion source 230 °C; interface 300 °C; scan range 25 - 500 amu; event time (sec) 0.05; scan speed 20000. Commercial tools (Shimadzu's LabSolutions, Zoex's GC Image) were used for data processing including identification of the detected compounds or hydrocarbon groups, and for determining their mass concentrations by application of response factors relative to n-heptane to the volumes of detected peaks followed by normalization to 100 wt-%. Olefins were lumped with naphthenes, and heteroatomic species with aromatic hydrocarbons, unless separately reported. The limit of quantitation for individual compounds of this method is 0.1 wt-%.

Penetrating oil compositions have been studied earlier in WO20249846A1 by the present applicant. In these earlier studies, it was found that a combination of 55-98 vol-% of an isoalkane solvent and 2-30 vol-% of an oil derived from biological sources provided a penetrating oil having very good penetrating performance, release and rust removal properties, as well as satisfactory lubricating properties. Additising with 0.1-5 vol-% of a lubricity additive further improved the release properties, the separation properties (separation of surface in close contact with each other), and lubricating properties of the penetrating oil.

For a genuine multipurpose oil performing in real world conditions even more versatile properties are needed, including particularly anticorrosion and water displacement performance. A desired multipurpose oil would have very good lubricating performance even without a lubricity additive, or when a lubricity additive is used, a further improved lubricating performance. At the same time a desired multipurpose oil would have very good anticorrosion properties, and ability to displace water in order to perform well when applied to areas where moisture is already present. Today, CRC 5-56 and WD-40 are probably the best known state of the art multipurpose oils. WD-40 is marketed usable as a lubricant, penetrant, for driving out moisture, and for removing and protecting surfaces from corrosion. CRC 5-56's main application area is indicated to be lubricants, but it is commonly marketed as usable also for penetration, corrosion protection and cleaning. However, CRC 5-56 and WD-40 are not optimal for various reasons. WD-40 suffers *inter alia* from high volatility limiting its penetration performance. CRC 5-56 is less volatile, but has limited anticorrosion performance including early onset of corrosion even at mild conditions and clear failure at harsh high humidity conditions, as was observed in the present experimental Examples.

Another major limitation relates to safety. WD-40 product contains as hydrocarbon components < 70wt-% of aliphatic hydrocarbons (CAS n:o 64742-47-8) having GHS classification Flammable liquids 3, and <25 wt-% of petroleum base oil marked as being "Not hazardous" under GHS classification, according to a safety data sheet (SDS) of WD-40. Flash point of WD-40 is said to be 45 °C (closed-cup). CRC 5-56 product contains as hydrocarbon components 60-100 wt-% of distillates (petroleum), hydrotreated light, kerosine - unspecified (CAS n:o 64742-47-8), and 10-30 wt-% of mineral oil (IP 346 DMSO extract < 3%), according to a material safety data sheet (MSDS) of CRC 5-56. Flash point of CRC 5-56 is said to be 78°C (closed-cup).

Under GHS, liquids having a flash point of not more than 93 °C are regarded as flammable liquids and classified in one of categories 1-4 based at least on their flash point. GHS flammable liquids class 3 is for flammable liquid and vapour having flash point ≥ 23 °C and ≤ 60 °C. Just for comparison purposes, surfaces of conventional panel radiators can have clearly higher temperatures, such as 70 °C, than the flash point of GHS class 3 flammable liquids, and even so-called low surface temperature radiators have a surface temperature 43 °C, which is within the flash point range of GHS class 3 flammable liquids. It is evident that products, such as WD-40, containing a high share of GHS class 3 flammable liquids, need to be used and preferably also stored in very well ventilated space.

The present disclosure provides a multipurpose oil comprising, based on the total volume of the multipurpose oil, 80.0-99.5 vol-%, preferably 85.0-99.0 vol-%, more preferably 87.0-98.5 vol-% of a renewable hydrocarbon base stock; and 0.5-20.0 vol-%, preferably 1.0-15.0 vol-%, more preferably 1.5-13.0 vol-% of an anionic surfactant composition, preferably comprising at least one or more anionic aromatic surfactant(s), more preferably anionic aromatic surfactant(s) containing mono- and/or di- alkaryl group(s); wherein the renewable hydrocarbon base stock comprises, based on the total weight of the renewable hydrocarbon base stock, more than 50 wt-% of C14-C20 hydrocarbons and at least 90 wt-% of paraffins, of which paraffins at least 70 wt-% are isoparaffins, and wherein the renewable hydrocarbon base stock has a biogenic carbon content of more than 80 wt-%, based on the total weight of carbon in the hydrocarbon base stock (EN 16640 (2017)).

It has surprisingly been found that the multipurpose oil according to the present disclosure has excellent anticorrosion, water displacement, and penetration performance, as well as good lubricating properties, as shown in the experimental Examples. This combination ensures that the anticorrosion, water displacement, and lubricity effects reach not only the easily accessible open surfaces, but also hard to reach crevices. Additionally, largely thanks to the characteristics of its principal constituent, i.e. the renewable hydrocarbon base stock, the present multipurpose oil has improved safety and more relaxed ventilation efficiency requirements at the place of use and storage, as well as improved environmental safety. Surprisingly, the excellent anticorrosion, water displacement, and penetration performance, as well as good lubricating properties, even at low ambient temperatures, are reached by very low or minimal additization of the renewable hydrocarbon base stock. Merely 0.5-20.0 vol-%, preferably 1.0-15.0 vol-%, more preferably just 1.5-13.0 vol-%, such as 5.0-13.0 vol-% of the anionic surfactant composition, based on the total volume of the multipurpose oil, is needed. In other words, the content of the renewable hydrocarbon base stock may be very high, 80.0-99.5 vol-%, preferably 85.0-99.0 vol-%, more preferably 87.0-98.5 vol-%, such as 87.0-95.0 vol-% of the total volume of the multipurpose oil, thereby increasing the bio-content, environmental safety, and safety relating to use and storage, as well as ensuring satisfactory anticorrosion, water displacement, penetration, and lubricating performance even at low ambient temperatures. Additional constituents such as ester based lubricant oils may be included in the present multipurpose oil, but such additional constituents are not necessary which allows improving the stability and storage properties (length of shelf life) of the multipurpose oil.

In certain embodiments, the renewable hydrocarbon base stock comprises, based on the total weight of the renewable hydrocarbon base stock, at least 60 wt-% or at least 70 wt-%, preferably at least 80 wt-%, more preferably at least 85 wt-%, even more preferably at least 90 wt-% of C14-C20 hydrocarbons. Increasing the content of C14-C20 hydrocarbons helps to control the flash point and the volatility of the multipurpose oil, preferably increasing the flash point and decreasing volatility, thereby improving safety, and relaxing ventilation efficiency requirements at the place of use and storage of the multipurpose oil. Since these properties relate also to the rate of drying when multipurpose oil is applied on surfaces, also the performance characteristics of the multipurpose oil may be beneficially contributed. Increasing the content of C14-C20 hydrocarbons, in combination with the high isoparaffins content, contributes beneficially also to the fluidity of the multipurpose oil, as reflected by kinematic viscosity at 20 °C, ensuring that the multipurpose oil is not too runny allowing the oil to remain longer on treated (even vertical) surfaces and hence to improve performance characteristics.

In certain embodiments, the renewable hydrocarbon base stock comprises, based on the total weight of the renewable hydrocarbon base stock, at most 20 wt-%, preferably at most 15 wt-%, more preferably at most 12 wt-% of <C14 hydrocarbons. By limiting the content of <C14 hydrocarbons, the flash point and volatility as well as the fluidity (as reflected by elevated kinematic viscosity at 20 °C) of the multipurpose oil may be further controlled, thereby contributing beneficially also to at least some of the performance characteristics. In certain embodiments, the renewable hydrocarbon base stock comprises, based on the total weight of the renewable hydrocarbon base stock, at most 5.0 wt-%, preferably at most 4.0 wt-%, more preferably at most 3.0 wt-%, even more preferably at most 2.0 wt-% of >C20 hydrocarbons. By limiting the content of >C20 hydrocarbons, the cold performance of the multipurpose oil may be further improved, and the fluidity kept at a desired level, i.e. avoid too viscous composition.

Preferably, the hydrocarbon base stock contains hydrocarbons distributed over at least a few carbon numbers. In certain preferred embodiments, the hydrocarbon base stock comprises within the C14-C20 range at least three carbon numbers that each has, independently from each other, a sum amount of hydrocarbons at least 5 wt-%, preferably at least 10 wt-%, more preferably at least 15 wt-%, based on the total weight of the hydrocarbon base stock. For example, the sum amount of hydrocarbons having carbon number C16 may be at least 5 wt-%, the sum amount of hydrocarbons having carbon number C17 may be at least 5 wt-%, and the sum amount of hydrocarbons having carbon number C18 may be at least 5 wt-%. Preferably, the sum amount of hydrocarbons of any single carbon number within the C14-C20 range is at most 55 wt-%, preferably at most 50 wt-%, more preferably at most 45 wt-%, based on the total weight of the hydrocarbon base stock. That is, preferably the sum amount of hydrocarbons of each of C14-C20 is at most as defined in the foregoing. Presence of hydrocarbons of different carbon numbers in non-negligible amounts, and/or avoiding dominance of hydrocarbons of any single carbon number contributes beneficially to performance characteristics, for example, enabling the multipurpose oil to perform at a wider range of application conditions, and to dissolve a wider range of different compounds. This is beneficial also for reducing the risk of additive(s) in the multipurpose oil to precipitate out.

In certain embodiments, the renewable hydrocarbon base stock comprises, based on the total weight of the renewable hydrocarbon base stock, at most 8.0 wt-%, preferably at most 5.0 wt-%, more preferably at most 3.0 of naphthenes; and/or less than 2.0 wt-%, preferably at most 1.0 wt-%, more preferably at most 0.5 wt-% of olefins; and/or at most 1.0 wt-%, preferably at most 0.5 wt-%, more preferably at most 0.2 wt-% of aromatic hydrocarbons. Reducing or minimizing the content of naphthenes may enhance biodegradability, reducing or minimizing the content of olefins may enhance storage stability, and reducing or minimizing the content of aromatic hydrocarbons is beneficial from user and environmental safety point of view.

In certain embodiments, the renewable hydrocarbon base stock has a T5 temperature (5 vol-% recovered) within a range from 170 to 280 °C, preferably within a range from 220 to 260 °C, and a T95 temperature within a range from 250 to 340 °C, preferably within a range from 270 to 320 °C, according to EN ISO 3405-2019, and preferably a difference between T95 and T5 temperatures (T95-T5) within a range from 40 to 100 °C, more preferably from 40°C to 80 °C. By adjusting the T5 and/or the T95 of the renewable hydrocarbon base stock, it is possible to reduce the content of the light end and/or the heavy end hydrocarbons, and hence to control the flash point, volatility, cold performance, and fluidity of the multipurpose oil. Preferably, the renewable hydrocarbon base stock has a difference between T95 and T5 temperatures (T95-T5) is within a range from 40 to 100 °C, more preferably from 40°C to 80 °C. A relatively broad boiling point distribution and thus presence of hydrocarbons of different carbon numbers contributes beneficially to performance characteristics, such as corrosion resistance and lubrication performance even at high temperature and may contribute to a prolonged contact time of the multipurpose oil. A relatively broad boiling point distribution reduces the risk of significant evaporation even at high temperatures compared to compositions with a narrow light end boiling range, as well as reduced fluidity at low temperatures compared to compositions with a narrow heavy end boiling range. A broader boiling range may also improve ability to dissolve wider variety of other compounds and reduce the risk of precipitation of additive(s) in the multipurpose oil.

In certain embodiments, the renewable hydrocarbon base stock has a ratio of the difference between T50 and T5 temperatures to the difference between T95 and T50 temperatures (T50-T5)/(T95-T50) within a range from 1.0 to 7.0, preferably within a range from 1.5 to 6.0. A broader boiling point distribution of the light end contributes beneficially to corrosion resistance, and the presence of heavier hydrocarbons ensures lubrication performance even at high temperature.

In certain embodiments, the renewable hydrocarbon base stock comprises, based on the total weight of the renewable hydrocarbon base stock, at most 5.0 wt-%, preferably at most 4.0 wt-%, more preferably at most 3.0 wt-% of <C11 hydrocarbons. By limiting the content of <C11 hydrocarbons, the flash point and volatility of the multipurpose oil may be further controlled, thereby contributing beneficially to safety and at least to some of the performance characteristics of the multipurpose oil.

In certain embodiments, the renewable hydrocarbon base stock comprises, based on the total weight of the renewable hydrocarbon base stock, at least 95 wt-%, preferably at least 97 wt-% of paraffins. High content of paraffins is beneficial due to their non-toxicity and safety to humans and environment. A higher paraffin content allows also incorporating a higher share of isoparaffins to the multipurpose oil. In certain preferred embodiments, of the paraffins at least 75 wt-%, more preferably at least 80 wt-%, even more preferably at least 85 wt-%, further more preferably at least 90 wt-%, most preferably at least 93 wt-% are isoparaffins. Compared to n-paraffins, isoparaffins of equal carbon number have an improved (lower) pour point and cloud point, and lower kinematic viscosity even at low ambient temperatures, in other words isoparaffins have better fluidity and cold properties than n-paraffins of equal carbon number. By increasing the share of isoparaffins of the total weight of paraffins, the cold performance of the multipurpose oil may be further improved and the fluidity of the multipurpose oil further optimized or controlled.

In certain embodiments, the renewable hydrocarbon base stock comprises, based on the total weight of paraffins in the renewable hydrocarbon base stock, at least 30 wt-%, preferably at least 40 wt-%, more preferably at least 45 wt-% of multiple-branched isoparaffins. Compared to mono-branched isoparaffins, multiple-branched isoparaffins of equal carbon number have a further improved pour point and cloud point, and lower kinematic viscosity even at low ambient temperatures. By increasing the share of multiple-branched isoparaffins of the total weight of paraffins, the cold performance of the multipurpose oil may be even further improved and the fluidity of the multipurpose oil even further optimized or controlled.

As contributed by the desired compositional characteristics specified in the foregoing, in certain embodiments, the renewable hydrocarbon base stock has a kinematic viscosity at 40 °C, as determined according to EN ISO 3104-2020, within a range from 1.8 to 5.0 mm/s², preferably from 2.0 to 4.5 mm/s², more preferably from 2.2 to 4.0 mm/s², even more preferably from 2.5 to 3.5 mm/s². In certain embodiments, the renewable hydrocarbon base stock has a kinematic viscosity at 20 °C, as determined according to EN ISO 3104-2020, within a range from 2.5 to 7.0 mm/s², preferably from 3.0 to 6.5 mm/s², more preferably from 3.5 to 6.0 mm/s², even more preferably from 4.0 to 5.5 mm/s². The fluidity of the multipurpose oil is expected to be particularly beneficial for typical uses of a multipurpose oil, when its principal constituent, i.e. the renewable hydrocarbon base stock, has kinematic viscosity within the specified ranges.

In certain embodiments, the renewable hydrocarbon base stock is classified as readily biodegradable according to OECD Test Guideline 301 B.

In principle, any anionic surfactant composition sufficiently soluble in the renewable hydrocarbon base stock may be selected for the multipurpose oil of the present disclosure. Preferably, the anionic surfactant composition comprises anionic aromatic surfactant(s), as aromatic group(s) typically enhance solubility in the renewable hydrocarbon base stock. Preferably, said anionic aromatic surfactant(s) contain(s) an alkaryl group, such as alkylbenzene or alkylnaphthalene group, further enhancing solubility in the renewable hydrocarbon base stock. In certain embodiments, the anionic surfactant composition comprises at least one or more anionic surfactant selected from aromatic sulfonate(s), aromatic carboxylate(s), aromatic sulfate(s), and/or aromatic phosphate(s), preferably at least one or more anionic surfactant selected from aryl and/or alkaryl sulfonate(s), aryl and/or alkaryl carboxylate(s), aryl and/or alkaryl sulfate(s), aryl and/or alkaryl phosphate(s), phenate(s), and/or salicylate(s), more preferably at least one or more anionic surfactant selected from aryl and/or alkaryl sulfonate(s), even more preferably at least one or more anionic surfactant selected from alkaryl sulfonate(s). Of the aforementioned surfactants, alkaryl compounds are preferred as they may, in addition to good solubility in the renewable hydrocarbon base stock, provide the multipurpose oil with increased kinematic viscosity e.g. enhancing contact time of the multipurpose oil on treated areas. Aromatic sulfonate, carboxylate, sulfate and/or phosphate surfactants may provide better water-solubilising properties compared e.g. to alcohol or ether surfactants, while sulfonate(s) may be preferred e.g. due to their stability to hydrolysis and pH-extremes. Various anionic surfactant compositions that are soluble in the renewable hydrocarbon base stock are readily available on the market, for example as solid crystalline or paste-like products or formulated e.g. with a mineral oil. Typically, the anionic surfactant composition comprises anionic surfactant(s) 10-100 wt-%, such as 40-100 wt-%, based on the total weight of the anionic surfactant composition. For example, the anionic surfactant composition may consist essentially of the anionic surfactant(s) and optionally a carrier and/or diluent, such as a mineral oil. While the anionic surfactant composition used in the present multipurpose oil may well comprise nonaromatic surfactants, such as fatty or alkyl anionic surfactants, anionic aromatic surfactants, especially the anionic alkaryl surfactants, are preferred due to their good availability and efficacy.

An anionic alkaryl surfactant molecule may contain one or more alkyl groups, preferably one and/or two alkyl groups. The alkyl groups may be linear and/or branched, preferably linear due to better biodegradability. For example, the alkyl group(s) may be selected, independently from each other, from linear and/or branched C4-C32 alkyl groups, preferably C6-C30 alkyl groups. Preferably, the alkaryl sulfonate(s), the alkaryl carboxylate(s), the alkaryl sulfate(s), and/or the alkaryl phosphate(s), especially the alkaryl sulfonate(s), may be alkaryl compound(s) wherein aryl is substituted with one or two alkyl groups, which alkyl group(s) may be selected, independently from each other, e.g. from linear and/or branched C4-C32 alkyl groups, preferably C6-C30 alkyl groups, such as C4-C30 alkyl groups or C6-C28 alkyl groups. Anionic surfactants having at least one alkyl group are preferred as they may increase kinematic viscosity. Increased viscosity allows enhanced contact time, even when the multipurpose oil is applied on vertical surfaces, thus improving performance characteristics. Accordingly, in certain preferred embodiments, the anionic aromatic surfactant(s) contain(s) alkaryl group(s), particularly mono- and/or di-alkylaryl group(s). In certain particularly preferred embodiments, the anionic surfactant composition comprises at least one or more anionic surfactant(s) selected from alkaryl sulfonate(s), alkaryl carboxylate(s), alkaryl sulfate(s), alkaryl phosphate(s), preferably from alkaryl sulfonate(s), alkaryl carboxylate(s), alkaryl sulfate(s), and/or alkaryl phosphate(s).

The anionic surfactant composition may comprise at least one or more anionic surfactant salt(s) selected from calcium, magnesium, barium, sodium, potassium, lithium, ammonium, amine, and/or alkanolamine salt(s). In certain preferred embodiments, the anionic surfactant composition comprises at least one or more anionic surfactant salt(s) selected from calcium, magnesium, barium, sodium, potassium, and/or lithium salt(s), preferably at least one or more anionic surfactant salt selected from calcium, and/or magnesium salt(s), more preferably at least one or more anionic surfactant salt selected from calcium salt(s). These salts may be salts of aromatic anionic surfactant(s) as specified above. Preferably, these salts may be salts of anionic aromatic surfactant(s) containing an alkaryl group, as specified above. More preferably, these salts may be magnesium and/or calcium salt(s) of anionic aromatic surfactant(s) containing an alkaryl group, as specified above. The calcium and/or magnesium salts may have better solubility in non-aqueous matrices. Divalent counterion(s), (e.g. Ca ion, Mg ion) may increase kinematic viscosity as, without being bound to any theory, they are believed to attach or bring anionic molecules together increasing the bulkiness provided by the anionic surfactants.

In certain embodiments, the anionic surfactant composition comprises at least one or more anionic surfactant(s) selected from calcium, magnesium, amine, and/or alkanolamine salt(s) of aryl and/or alkaryl sulfonate(s), preferably at least one or more anionic surfactant(s) selected from calcium, magnesium, amine, and/or alkanolamine salt(s) of alkaryl sulfonate(s), more preferably at least one or more anionic surfactant selected from calcium salt(s) of alkyl benzene sulfonate(s) and/or calcium salt(s) of alkyl naphthalene sulfonate(s). These anionic surfactants may have better solubility in non-aqueous matrices combined with stability to hydrolysis and pH-extremes.

The anionic surfactant composition may contain more than one anionic surfactant(s), such as more than one aromatic anionic surfactant(s), preferably a mixture of two or even more anionic aromatic surfactant(s) as defined in the foregoing, for example a mixture of Ca bis(di C8-10, branched, C9 rich, alkylnaphthalene sulphonate) and Ca salt of mono-C20-24 (even)-sec-alkyl-benzenesulphonate.

Preferably, the anionic surfactant(s) are selected from those having "no adverse effect observed" via oral, inhalation, and/or dermal route as the acute toxicity endpoint conclusion in the REACH substance registry of ECHA.

In certain embodiments, the multipurpose oil further comprises, based on the total volume of the multipurpose oil, 1.0-15.0 vol-%, preferably 1.0-12.0 vol-% of a lubricant oil, wherein the lubricant oil comprises at least one or more of renewable ester based lubricant(s) and/or hydrocarbon based lubricant(s). The renewable ester based lubricant(s) are preferably selected from fatty acid glyceride(s) and/or fatty acid alkyl ester(s). Examples of suitable hydrocarbon based lubricant(s) include e.g. hydrotreated C15-C30 oils or hydrotreated C20-C50 oils. Such hydrotreated oils may consist essentially of hydrocarbons (mainly isoparaffins and/or naphthenes) with carbon numbers within the specified range. Preferably the hydrocarbon based lubricant(s) have a kinematic viscosity at 40 °C, as determined according to EN ISO 3104-2020, more than 5.0 mm/s², preferably at least 6.0 mm/s², more preferably at least 10 mm/s², even more preferably at least 15 mm/s². In certain preferred embodiments, the hydrocarbon based lubricant(s) comprise light hydrocarbon lubricant(s) boiling within a range from 200 °C to 400 °C (EN ISO 3405-2019) and/or heavy hydrocarbon lubricant(s) boiling above 300 °C (EN ISO 3405-2019). The hydrocarbon based lubricant(s) may be of fossil origin, with or without circular component(s). In the experimental Examples of the present disclosure, it was found that incorporating renewable ester based lubricant to the present multipurpose oils enhanced lubricity properties. In the experimental Examples it was surprisingly also found that hydrocarbon based lubricants provided very good lubricity enhancement merely when incorporated in the multipurpose oils according to the present disclosure. Particularly the lubricity enhancement provided by a heavy hydrocarbon lubricant (rich in C20-C50) was remarkable. Without wishing to be bound to a theory it is believed that the highly isoparaffinic renewable hydrocarbon base stock, the anionic surfactant composition, and the hydrocarbon-based lubricant(s) provide a synergistic effect.

In certain embodiments, the multipurpose oil further comprises, based on the total volume of the multipurpose oil, 0.001-5.0 vol-%, preferably 0.1-5.0 vol-% of a dry lubricity additive, wherein the dry lubricity additive preferably comprises 1.0-50 wt-% solid particles and 50-99 wt-% carrier oil of the total weight of the dry lubricity additive, more preferably 5.0-40 wt-% solid particles and 60-95 wt-% carrier oil of the total weight of the dry lubricity additive, and/or wherein the solid particles of the dry lubricity additive preferably comprise at least one or more of graphite particles, graphene particles, boron nitride particles, molybdenum disulfide particles, tungsten disulfide particles and/or polytetrafluoroethylene particles. An advantage of graphite and graphene particles is that they are biodegradable. Optionally, a multipurpose oil composition with enhanced biodegradability may be provided by embodiments in which the solid particles of the dry lubricity additive are graphite and/or graphene particles and the carrier oil is a biodegradable carrier oil, such as an oil derived from biological sources.

In certain embodiments, the multipurpose oil comprises, based on the total volume of the multipurpose oil, 80.0-99.5 vol-%, preferably 85.0-99.0 vol-%, more preferably 87.0-98.5 vol-%, such as 87.0-95.0 vol-%, of the renewable hydrocarbon base stock; 0.5-20.0 vol-%, preferably 1.0-15.0 vol-%, more preferably 1.5-13.0 vol-%, such as 5.0-13.0 vol-%, of the anionic surfactant composition; optionally 1.0-15.0 vol-%, preferably 1.0-12.0 vol-% of a lubricant oil; optionally 0.001-5.0 vol-%, preferably 0.1-5.0 vol-% of a dry lubricity additive; optionally 0.0001-5.0 vol-%, preferably 0.001-3.0 vol-% of one or more further additives in total; wherein the sum amount of the renewable hydrocarbon base stock, the anionic surfactant composition, the optional dry lubricity additive, the optional lubricant oil, and the optional further additives is 100.0 vol-%. The optional further additives may include e.g. antirust additives, viscosity modifiers, flash point modifiers, and/or the like.

In certain embodiments, the multipurpose oil has a flash point, as determined according to EN ISO 2719-2016 A, at least 70 °C, preferably at least 75 °C; and/or Noack100, as determined according to ASTM D5800-B-2020, less than 12 wt-%, preferably less than 10 wt-%, and/or pour point, as determined according to ASTM D5950-14(2000), -25 °C or lower, preferably -30 °C or lower; and/or kinematic viscosity at 20 °C, as determined according to EN ISO 3104-2020, within a range from 3.8 to 7.0 mm/s², preferably from 4.5 to 6.5 mm/s². These properties of the multipurpose oil are expected to be particularly beneficial for typical uses of a multipurpose oil, when within the specified ranges. The specified ranges are easily attainable largely thanks to the compositional characteristics of the renewable hydrocarbon base stock, as optionally adjusted by suitably selecting further components.

A low pour point, e.g. as defined above, means that the present multipurpose oil may stay fluid even at low ambient temperatures enabling it e.g. to penetrate and to spread evenly on surfaces without clots, which is beneficial e.g. when used for anticorrosion, water displacement, and/or cleaning. Also, a low pour point is beneficial in that solidification of the present multipurpose oil may be avoided even if ambient temperature drops even to sub-zero degrees (°C).

In certain embodiments, the multipurpose oil is formulated to an aerosol product with a propellant in a volume ratio within a range from 1:99 to 10:90, preferably from 2:98 to 7:93, of the propellant to the multipurpose oil, wherein the propellant preferably comprises at least one or more of CO₂, air, N₂, propane, and/or butane, more preferably at least one or more of CO₂, air, and/or N₂, even more preferably CO₂.

According to a second example aspect, herein is provided a method for producing a multipurpose oil according to the first example aspect, comprising:
mixing a renewable hydrocarbon base stock having a biogenic carbon content of more than 80 wt-%, based on the total weight of carbon in the hydrocarbon base stock (EN 16640 (2017)), and comprising, based on the total weight of the renewable hydrocarbon base stock, more than 50 wt-% of C14-C20 hydrocarbons and at least 90 wt-% of paraffins, of which paraffins at least 70 wt-% are isoparaffins; and an anionic surfactant composition, preferably comprising at least one or more anionic aromatic surfactant(s), more preferably anionic aromatic surfactant(s) containing an alkaryl group; to form a multipurpose oil comprising, based on the total volume of the multipurpose oil, 80.0-99.5 vol-%, preferably 85.0-99.0 vol-%, more preferably 87.0-98.5 vol-% of the renewable hydrocarbon base stock, and 0.5-20.0 vol-%, preferably 1.0-15.0 vol-%, more preferably 1.5-13.0 vol-% of the anionic surfactant composition. The anionic surfactant composition may be for example as a solid crystalline or paste-like product or formulated e.g. with a mineral oil. Duration and efficiency of the mixing are selected suitably so as to get the anionic surfactant composition dissolved in the renewable hydrocarbon base stock.

In certain embodiments, the method further comprises incorporating at least one or more of a lubricant oil, a dry lubricity additive, and/or one or more further additive(s) to form a multipurpose oil comprising, based on the total volume of the multipurpose oil, 1.0-15.0 vol-%, preferably 1.0-12.0 vol-% of the lubricant oil (when incorporated); 0.001-5.0 vol-%, preferably 0.1-5.0 vol-% of the dry lubricity additive (when incorporated); and/or 0.0001-5.0 vol-%, preferably 0.001-3.0 vol-% of the further additive(s) in total (when incorporated); wherein the sum amount of the renewable hydrocarbon base stock, the anionic surfactant composition, and the at least one or more dry lubricity additive, lubricant oil, and/or further additive(s) is 100.0 vol-%. The lubricant oil, the dry lubricity additive, and/or the one or more further additive(s) may be incorporated by mixing. The order in which the components of the present multipurpose oil are mixed with each other is not particularly limited, and they may be mixed in any suitable order.

In certain embodiments, the method further comprises formulating the multipurpose oil with a propellant in a volume ratio within a range from 1:99 to 10:90, preferably from 2:98 to 7:93, of the propellant to the multipurpose oil, to form an aerosol product of the multipurpose oil.

In certain embodiments of the present method, the renewable hydrocarbon base stock, and/or the anionic surfactant composition, and/or the multipurpose oil is as further defined in at least one or more of the foregoing embodiments.

According to a third example aspect, herein is provided use of a multipurpose oil according to the first example aspect, or obtainable by a method according to the second example aspect, for at least two or more, preferably three or more, of anticorrosion, penetration, lubrication, water displacement, and/or cleaning, said cleaning preferably comprising at least one or more of rust removal, dirt removal, tar removal, and/or degreasing. In certain particularly preferred embodiments, the use of the present multipurpose oil is for anticorrosion, penetration, lubrication, water displacement, and rust removal. In the experimental Examples of the present disclosure, it was surprisingly found that of the studied compositions merely the multipurpose oils according to the present disclosure were able to combine excellent anticorrosion and water displacement performances as well as good lubricating properties with excellent penetration performance, ensuring that the anticorrosion, water displacement, and lubricity effects reach not only the easily accessible open surfaces, but also hard to reach crevices. The present multipurpose oil also showed good rust removing performance. Rust is typically harder to remove or clean away compared e.g. to dirt, tar, and/or grease. Hence, good rust removal performance may be seen as indicative of good ability to remove or clean away dirt, tar, and/or grease, especially from metal surfaces. The above described surprising combination of properties of the present multipurpose oil is, without being bound to any theory, believed to be contributed by synergistic effect of the renewable hydrocarbon composition and the anionic surfactant composition.

Renewable hydrocarbon base stocks having the characteristics as specified in the foregoing are readily available e.g. by catalytic hydrotreatment of oxygenated hydrocarbon feedstocks followed by isomerisation. Preferably, the oxygenated hydrocarbon feedstock comprises at least one or more of vegetable oils, animal fats, microbial oils, and/or fats and oils from wastes and residues. From compositional viewpoint, preferred oxygenated hydrocarbon feedstocks comprise at least one or more of fatty acids, fatty acid esters such as mono-, di- and/or triglycerides and/or C1-5 alkyl esters, fatty alcohols, and/or fatty acid derivatives.

The catalytic hydrotreatment may be hydrodeoxygenation (HDO), preferably performed at a pressure selected from a range from 2 to 15 MPa, preferably from 3 to10 MPa, and at a temperature selected from a range from 200 to 500 °C, preferably from 280 to 400 °C. The hydrotreatment may be performed in the presence of known hydrotreatment catalyst containing metals from Group VIII and/or VIB of the Periodic System. Preferably, the hydrotreatment catalyst is supported Pd, Pt, Ni, NiW, NiMo, or CoMo catalyst, wherein the support is alumina and/or silica. Typically, NiMo/Al₂O₃ and/or CoMo/Al₂O₃ catalysts are used. Preferably, the hydrotreatment effluent is subjected to a gas-liquid separation to remove light compounds and water, to obtain n-paraffinic hydrocarbon feed. The isomerisation treatment following the hydrotreatment converts at least a certain amount of n-paraffins to i-paraffins, especially to mono-branched i-paraffins. By (further) raising the isomerisation degree, for example by increasing severity of the isomerisation, more n-paraffins can be converted to i-paraffins, and mono-branched i-paraffins to multiple-branched i-paraffins, such as di-branched, tri-branched i-paraffins, even i-paraffins comprising more than three branches. While the isomerisation treatment is not particularly limited, catalytic hydroisomerisation is preferred. The hydroisomerisation treatment is preferably conducted at a temperature within a range from 200 °C to 500 °C, preferably from 230 °C to 500 °C, more preferably from 250 °C to 450 °C, even more preferably from 280 °C to 400 °C, a pressure within a range from 1 MPa to 10 MPa, preferably from 2 MPa to 8 MPa or from 3 MPa to 10 MPa, a H₂ partial pressure within a range from 1 MPa to 10 MPa, preferably from 2 MPa to 8 MPa, a weight hourly space velocity within a range from 0.1 to 10, preferably from 0.2 to 8, more preferably from 0.4 to 6 kg n-paraffinic hydrocarbon feed per kg catalyst per hour, and a H₂ to n-paraffinic hydrocarbon feed ratio within a range from 10 to 2000, preferably from 50 to 1000 normal liters H₂ per liter n-paraffinic hydrocarbon feed. Severity of the isomerisation may be increased by at least one or more of: decreasing WHSV, increasing temperature, and/or increasing pressure. The isomerisation treatment may be performed in the presence of known isomerisation catalysts, for example, catalysts containing a molecular sieve, and/or a metal selected from Group VIII of the Periodic Table, and a carrier. Preferably, the isomerisation catalyst is a catalyst containing SAPO-11 or SAPO-41 or ZSM-22 or ZSM-23 or ferrierite, and Pt or Pd or Ni, and Al₂O₃ or SiO₂. Typical isomerisation catalysts are, for example, Pt/SAPO-11/Al₂O₃, Pt/ZSM-22/Al₂O₃, Pt/ZSM-23/Al₂O₃, and/or Pt/SAPO-11/SiO₂. The isomerisation may be conducted for example as described in prior art publications, such as FI100248B, EP1741768A1, EP2155838B1, or FI129220 B1.

The renewable hydrocarbon base stock may be separated from the isomerisation effluent as a fraction having a T5 temperature (5 vol-% recovered) within a range from 170 to 280 °C, preferably within a range from 220 to 260 °C, and a T95 temperature within a range from 250 to 340 °C, preferably within a range from 270 to 320 °C, according to EN ISO 3405-2019, and preferably a difference between T95 and T5 temperatures within a range from 40 to 100 °C.

### EXAMPLES

### EXAMPLE 1 - Preparation and certain physico-chemical properties of the renewable hydrocarbon base stock

Fully renewable oxygenated hydrocarbon feedstock containing animal fats and vegetable oils was first pre-treated to remove impurities using a conventional bleaching protocol. The bleached oxygenated hydrocarbon feedstock was subjected to hydrodeoxygenation (HDO) at about 320°C, about 50 bar, using sulphided NiMo on alumina catalyst with WHSV between 0.3-1 h⁻¹ and hydrogen flow between 500 and 1000 NI H₂/l feed. Gases and water were separated and discarded from the liquid stream to obtain a n-paraffinic hydrocarbon feed.

The obtained n-paraffinic hydrocarbon feed was subjected to hydroisomerisation (HI) in the presence of a non-sulphided bifunctional hydroisomerisation catalyst (Pt/SAPO). Conditions in the HI reactor were of medium severity. The obtained HI effluent was subjected to gas-liquid separation, followed by stabilisation thereby further removing a light naphtha fraction. The stabilized, liquid HI effluent was provided as the renewable hydrocarbon base stock. The renewable hydrocarbon base stock obtained by subjecting the fully renewable oxygenated hydrocarbon feedstock to pretreatment, HDO, and HI can be regarded to have a biogenic carbon content of about 100 wt-%, based on the total weight of carbon (TC) in the material (EN 16640 (2017)). The composition of the obtained renewable hydrocarbon base stock was analysed by GCxGC-FID/GCxGC-MS method. The results are presented in Table 1.1.

Certain physico-chemical properties of the renewable hydrocarbon base stock were analysed, and the analysis methods and the results are shown in Table 1.2.

**Table 1.1. Carbon number distribution of the renewable hydrocarbon base stock.**

| **Carbon number** | **Mono-branched isoparaffins (wt-%)** | **Multibranched isoparaffins (wt-%)** | **Total isoparaffins (wt-%)** | **Normal paraffins (wt-%)** | **Total (wt-%)** |
|---|---|---|---|---|---|
| **5** | 0.0 | 0.0 | 0.0 | 0.0 | 0.0 |
| **6** | 0.0 | 0.0 | 0.0 | 0.0 | 0.1 |
| **7** | 0.1 | 0.0 | 0.1 | 0.0 | 0.1 |
| **8** | 0.2 | 0.0 | 0.2 | 0.1 | 0.3 |
| **9** | 0.6 | 0.0 | 0.6 | 0.2 | 0.8 |
| **10** | 1.1 | 0.0 | 1.1 | 0.2 | 1.4 |
| **11** | 0.8 | 0.5 | 1.3 | 0.2 | 1.5 |
| **12** | 0.8 | 0.6 | 1.5 | 0.2 | 1.7 |
| **13** | 0.9 | 0.7 | 1.6 | 0.2 | 1.8 |
| **14** | 1.3 | 1.2 | 2.5 | 0.3 | 2.9 |
| **15** | 4.0 | 3.4 | 7.4 | 1.1 | 8.4 |
| **16** | 9.5 | 10.7 | 20.2 | 1.5 | 21.7 |
| **17** | 9.1 | 8.7 | 17.8 | 1.4 | 19.2 |
| **18** | 12.7 | 23.4 | 36.2 | 1.1 | 37.2 |
| **19** | 0.3 | 0.5 | 0.8 | 0.1 | 0.9 |
| **20** | 0.2 | 0.5 | 0.7 | 0.0 | 0.7 |
| **>20** | 0.8 | 0.4 | 1.2 | 0.0 | 1.2 |
| **Total** | **42.6** | **50.7** | **93.3** | **6.7** | **100.0** |

**Table 1.2. Certain physico-chemical properties of the renewable hydrocarbon base stock.**

| Measured property and method | Value |
|---|---|
| Distillation characteristics (°C), EN ISO 3405-2019 | |
| IBP (initial boiling point) | 203 |
| T5 (5 vol-% recovered) | 244 |
| T50 (50 vol-% recovered) | 281 |
| T95 (95 vol-% recovered) | 295 |
| FBP (final boiling point) | 304 |
| Cloud point (°C), ASTM D7689 | -33 |
| Density at 15°C (kg/m³), ASTM 4052-22 | 780 |
| Kinematic viscosity (mm/s²), EN ISO 3104-2020 | 4.6 (at 20°C) |
| | 3.0 (at 40°C) |

### EXAMPLE 2 - Preparation and certain physico-chemical properties of the multipurpose oils

In this Example, six multipurpose oils according to the present disclosure and seven comparison compositions were prepared and certain physico-chemical properties measured, and compared to two state of the art commercial reference products WD-40 and CRC 5-56, and to the renewable hydrocarbon base stock of Example 1 as neat. The materials used and their amounts are as shown in Tables 2.1-2.2. The measured physico-chemical properties are shown in Table 2.3.

**Table 2.1 Information on main components and some properties of the commercial multipurpose oil products WD-40 and CRC 5-56, and additive compositions, as publicly available e.g. from safety data sheets of commercially available products.**

| Commercial multipurpose oil / additive product | Main components | Boiling point (ENISO 3405 / ASM D86) | Relative density (ISO 12185) | Other |
|---|---|---|---|---|
| WD-40 | <70wt-% of aliphatic hydrocarbons (predominantly C9-C16), and <25 wt-% of petroleum base oil | 176°C (liquid phase) | 0.817 g/ml | CO₂ 2-3 %; VOC 24.5 wt-% |
| CRC 5-56 | 60-100 wt-% of distillates (petroleum), hydrotreated light, kerosine (C9-C11, n-, iso- and cyclo-alkanes, < 2% aromatic hydrocarbons), and 10-30 wt-% of mineral oil | | 0.82 g/cm³ | CO₂ 1-5% |
| Anionic surfactant composition | Mix of Ca bis(di C8-10, branched, C9 rich, alkylnaphthalene sulphonate) and Ca salt of mono-C20-24 (even)-sec-alkyl-benzenesuIphonate (paste in mineral oil) | > 232 °C | paste/crys talline | Ca salt of di C10-C14 alkyl benzenesulfonate was used in samples #15 and #16 |
| Hydrocarbon based rust inhibitor | C10-C13 n-, iso- and cyclo-alkanes, <2% aromatic hydrocarbons | 175 - 225 °C * | ~ 0.8 @ 15/4°C | Flash point ≥ 61°C (ENISO 2719); Pour point < -20°C (ASTM D 5950); KV < 3 mm²/s @ 40°C (ASTM D 7042) |
| C15-C30 lubricant | C15-C30 iso- and cycloalkanes | 270 - 380 °C * | 0.82 @ 15°C (ASTM D-4052) | Flash point > 150°C (ASTM D-93); Pour point ≤ -42°C (ASTM D 5950); KV 7.5 mm²/s @ 40°C (ASTM D-445) |
| C20-C50 lubricant | C20-C50 iso- and cycloalkanes | 350 - 600 °C * | 0.82-0.84 @ 15°C (ASTM D-4052) | Flash point > 220°C (ASTM D-92); Pour point ≤ - 12°C (ASTM D 5950); KV 20 mm²/s @ 40°C (ASTM D-445) |
| FA-ester based lubricant | Renewable fatty acid esters | | | |

| | | | | |
|---|---|---|---|---|
| * IBP and range, KV = kinematic viscosity | | | | |

**Table 2.2. Tested samples: Commercial multipurpose oil products WD-40 #1 and CRC 5-56 #2, renewable hydrocarbon base stock of Example 1 as neat #3, and compositions (vol-%) of the multipurpose oils #5 and #12-#15 according to the present disclosure, and comparison compositions #4 and #6-#11.**

| | #1 | #2 | #3 | #4 | #5 | #6 | #7 | #8 | #9 | #10 | #11 | #12 | #13 | #14 | #15 | #16 |
|---|---|---|---|---|---|---|---|---|---|---|---|---|---|---|---|---|
| WD-40 | 100 | | | | | | | | | | | | | | | |
| CRC 5-56 | | 100 | | | | | | | | | | | | | | |
| Renew. base stock of Ex. 1 as neat | | | 100 | 95 | 95 | 95 | 95 | 95 | 90 | 90 | 90 | 90 | 90 | 90 | 90 | 90 |
| Hydrocar bon based rust inhibitor | | | | 5 | | | | | 5 | 5 | 5 | | | | | |
| Anionic surfactant compositi on | | | | | 5 | | | | | | | 5 | 5 | 5 | 10 | 2 |
| C15-C30 lubricant | | | | | | 5 | | | 5 | | | 5 | | | | |
| C20-C50 lubricant | | | | | | | 5 | | | 5 | | | 5 | | | |
| FA-ester based lubricant | | | | | | | | 5 | | | 5 | | | 5 | | 8 |

**Table 2.3. Kinematic viscosity at 20 °C (mm²/s), Noack100 (wt-%), Pour point (°C), and Flash point (°C) as measured.**

| Sample | Kinematic viscosity @20°C (mm²/s), EN ISO 3104-2020 | Noack100 (wt-%), ASTM D5800-B-2020 | Pour point (°C), ASTM D5950-14(2000) | Flash point (°C), EN ISO 2719-2016A |
|---|---|---|---|---|
| #1 WD-40 | 3.56 | 47.5 | <-70 | 45.0 |
| #2 CRC 5-56 | 4.96 | 16.4 | -54 | 79.0 |

| #3 Renewable base stock of Ex. 1 as neat | 4.60 | 4.9 | -60 | 81.5 |
|---|---|---|---|---|
| #5 multipurpose oil | 5.16 | 4.8 | -39 | 82.5 |
| #12 multipurpose oil | 5.40 | 4.8 | -36 | 81.5 |
| #13 multipurpose oil | 5.62 | 5.0 | -36 | 81.5 |
| #14 multipurpose oil | 5.20 | 4.9 | -45 | 74.5 |
| #4 comparison comp. | 4.35 | 6.9 | -66 | 78.5 |
| #6 comparison comp. | 4.79 | 4.8 | -57 | 73.5 |
| #7 comparison comp. | 5.04 | 4.8 | -36 | 83.5 |
| #8 comparison comp. | 4.65 | 5.3 | -51 | 84.5 |
| #9 comparison comp. | 4.55 | 6.8 | -57 | 78.5 |
| #10 comparison comp. | 4.75 | 6.9 | -36 | 77.5 |
| #11 comparison comp. | 4.39 | 6.7 | -51 | 78.5 |

From Table 2.3 it can be seen that the commercial multipurpose oil WD-40 had very low flash point and very high volatility in terms of Noack100, making it less safe to use and requiring e.g. good ventilation at the place of storage and use. The other commercial multipurpose oil CRC 5-56 had a flash point comparative to the multipurpose oils according to the present disclosure and the comparison compositions, but the Noack100 volatility was about three times higher than that of the multipurpose oils according to the present disclosure. The lower flash point and/or higher volatility characteristics affect not only the safety and ventilation efficiency requirements at the place of use and storage, but also the rate of drying when applied to surfaces, a higher Noack100 value indicating faster drying.

The commercial multipurpose oil WD-40 had also lowest pour point and lowest kinematic viscosity at 20 °C, compared to all other tested compositions. While a very low pour point may be beneficial for application at low temperatures, a pour point of about -30 °C or lower is typically more than sufficient for the usual uses of multipurpose oils. Regarding the kinematic viscosity at 20 °C, here a lower value is not necessarily better, as typically the surfaces to be treated are not flat horizontal surfaces, so that a somewhat elevated kinematic viscosity may be helpful to prevent the multipurpose oil from running and dripping off, allowing the oil to remain longer on the treated surface. This may contribute beneficially also to various performance characteristics such as penetration and water displacement.

As a summary, in contrast to the state of the art commercial multipurpose oils, the multipurpose oils of the present disclosure presented a very desired combination of low Noack100 volatility, high flash point, low pour point, and a kinematic viscosity at 20 °C that allows the multipurpose oil to remain longer on the treated surface.

In the following Examples 3 and 4, tests for seven key performance characteristics for multipurpose oils were carried out.

### EXAMPLE 3 - Performance tests

Five experiments were conducted to study lubricity, anticorrosion, penetration, stability, and rust removal performance. The tested compositions included four multipurpose oils according to the present disclosure, commercial references WD-40 and CRC 5-56, renewable hydrocarbon base stock as neat, and seven comparison compositions.

### Example 3.1 - Lubricity using high-frequency reciprocating rig (HFRR)

Lubricity performance of the compositions were tested according to EN ISO 12156-1:2018, using high-frequency reciprocating rig (HFRR). The test results are presented in Table 3.1.

**Table 3.1. Lubricity performance according to EN ISO 12156-1:2018. The lower the value, the better the lubricity.**

| Sample | Lubricity (µm/60°C) EN ISO 12156-1:2018 |
|---|---|
| #1 WD-40 | 166 |
| #2 CRC 5-56 | 190 |
| #3 Renewable base stock as neat | 576 |
| #5 multipurpose oil | 294 |
| #12 multipurpose oil | 362 |
| #13 multipurpose oil | 249 |
| #14 multipurpose oil | 242 |
| #4 comparison composition | 604 |
| #6 comparison composition | 602 |
| #7 comparison composition | 582 |
| #8 comparison composition | 178 |
| #9 comparison composition | 598 |
| #10 comparison composition | 594 |
| #11 comparison composition | 167 |

From Table 3.1 it can be seen that the commercial multipurpose oils WD-40 and CRC 5-56 presented very good lubricity results (low HFRR), as did comparison compositions #8 and #11. The lubricity results of the multipurpose oils #5, #12, #13, and #14 according to the present disclosure were almost as good, and better than lubricity of a conventional diesel (460 µm). The lubricity results of the renewable hydrocarbon base stock #3 and the comparison compositions #4, #6, #7, #9, and #10 were significantly poorer (higher HFRR), much poorer than lubricity of a conventional diesel (460 µm). Incorporating a fatty acid ester based lubricant enhanced the lubricity performance of all compositions. However, compositions comprising a C15-C30 or C20-C50 hydrocarbon-based lubricant presented very good lubricity merely when incorporated in the multipurpose oils according to the present disclosure. In other words, the renewable hydrocarbon base stock, the anionic surfactant composition, and the hydrocarbon-based lubricants appear to provide a surprising synergistic effect.

### Example 3.2 - Anticorrosion

Corrosion protection properties of the compositions were tested using neutral salt spray (NSS) test according to EN ISO 9227:2017. DC01 grade oiled cold-rolled steel plates (100x70mm) were cleaned with acetone, after which they were completely immersed in commercial reference products WD-40 or CRC 5-56, the renewable hydrocarbon base stock, the multipurpose oils according to the present disclosure, or the comparison compositions, respectively. The steel plates were withdrawn from the immersions and placed on a rack. The oiled samples (the steel plates from the immersions) were held on the rack overnight before starting the corrosion test. Before starting the test, the samples were checked to see if there had been a significant amount of oil running off the sample pieces, which was not observed.

The test was performed in ACS DCTC600PN salt spray test chamber. During the test the samples were sprayed with 5 w-% NaCl salt solution at the temperature of 35 °C. The pH of the salt solution was neutral (pH 6.5-7.2). The total duration of the test performed was 22 hours. The progress of rusting of the samples was monitored on hourly basis and rated as: 0=no rust, 1=slight partial rusting, 2=slight rust throughout/significant partial rusting, 3=completely rusty. The recorded test results are presented in Table 3.2.

**Table 3.2. Anticorrosion performance using NSS test according to EN ISO 9227:2017. 0=no rust, 1=slight partial rusting, 2=slight rust throughout/significant partial rusting, 3=completely rusty.**

| Sample | 0h | 1h | 2h | 4h | 6h | 8h | 10h | 12h | 15h | 18h | 22h |
|---|---|---|---|---|---|---|---|---|---|---|---|
| #1 WD-40 | 0 | 0 | 0 | 0 | 1 | 1 | 1 | 1 | 2 | 2 | 3 |
| #2 CRC 5-56 | 0 | 1 | 1 | 2 | 2 | 2 | 2 | 2 | 2 | 3 | 3 |
| #3 Renewable hydrocarbon base stock as neat | 0 | 2 | 2 | 3 | 3 | 3 | 3 | 3 | 3 | 3 | 3 |
| #5 multipurpose oil | 0 | 0 | 1 | 2 | 3 | 3 | 3 | 3 | 3 | 3 | 3 |
| #12 multipurpose oil | 0 | 0 | 0 | 1 | 2 | 3 | 3 | 3 | 3 | 3 | 3 |
| #13 multipurpose oil | 0 | 0 | 1 | 2 | 2 | 2 | 3 | 3 | 3 | 3 | 3 |
| #14 multipurpose oil | 0 | 0 | 1 | 2 | 3 | 3 | 3 | 3 | 3 | 3 | 3 |
| #4 comparison composition | 0 | 2 | 2 | 3 | 3 | 3 | 3 | 3 | 3 | 3 | 3 |
| #6 comparison composition | 0 | 2 | 2 | 3 | 3 | 3 | 3 | 3 | 3 | 3 | 3 |
| #7 comparison composition | 0 | 2 | 2 | 3 | 3 | 3 | 3 | 3 | 3 | 3 | 3 |
| #8 comparison composition | 0 | 2 | 2 | 3 | 3 | 3 | 3 | 3 | 3 | 3 | 3 |
| #9 comparison composition | 0 | 2 | 2 | 3 | 3 | 3 | 3 | 3 | 3 | 3 | 3 |
| #10 comparison composition | 0 | 2 | 2 | 3 | 3 | 3 | 3 | 3 | 3 | 3 | 3 |
| #11 comparison composition | 0 | 2 | 2 | 3 | 3 | 3 | 3 | 3 | 3 | 3 | 3 |

From Table 3.2 it can be seen that the commercial multipurpose oil WD-40 outperformed in the corrosion protection performance presenting slight partial rusting at 6 h, and slight rust throughout/significant partial rusting at 15 h. Also the commercial multipurpose oil CRC 5-56, and the multipurpose oils #5, #12, #13, and #14 according to the present disclosure provided very good protection against corrosion under the test conditions. For the present multipurpose oils slight partial rusting was observed at least 1 hour later, and slight rust throughout/significant partial rusting not any earlier than for the commercial reference product CRC 5-56. The renewable hydrocarbon base stock #3 as neat and the comparison compositions #4 and #6-#11 presented slight rust throughout/significant partial rusting already within one hour. It was surprising how clearly the multipurpose oils according to the present disclosure outperformed e.g. the otherwise similar comparison compositions #4 and #9-#11 containing a hydrocarbon-based rust inhibitor instead of the anionic surfactant composition, although the hydrocarbon-based rust inhibitor is especially intended for rust inhibition. In other words, the renewable hydrocarbon base stock and the anionic surfactant composition appear to have a surprising synergistic effect.

### Example 3.3 - Penetration

Penetration performance of the compositions were tested using a climb test method. The test was performed by placing a threaded rod (length 10 cm, diameter 6 mm) into 3 ml of each composition, respectively. The vertical rise along the threaded rod was then measured in mm as a function of time. RED MCNY 25 colorant was added to each of the studied compositions to facilitate the measuring of the rise. The test results are presented in Table 3.3.

**Table 3.3. Penetration performance according to climb test method.**

| Sample | 0 min | 10 min | 60 min |
|---|---|---|---|
| #1 WD-40 | 3 | 13 | 17 |
| #2 CRC 5-56 | 4 | 17 | 23 |
| #3 Renewable hydrocarbon base stock as neat | 3 | 17 | 25 |
| #5 multipurpose oil | 2 | 19 | 30 |
| #12 multipurpose oil | 2 | 17 | 27 |
| #13 multipurpose oil | 2 | 18 | 27 |
| #14 multipurpose oil | 3 | 18 | 26 |
| #4 comparison composition | 4 | 19 | 26 |
| #6 comparison composition | 4 | 17 | 27 |
| #7 comparison composition | 3 | 19 | 26 |
| #8 comparison composition | 3 | 19 | 31 |
| #9 comparison composition | 3 | 20 | 29 |
| #10 comparison composition | 2 | 18 | 28 |
| #11 comparison composition | 3 | 21 | 26 |

From Table 3.3 it can be seen that of all the tested compositions, the commercial multipurpose oil WD-40 presented worst penetration test result at time point 10 min, the difference to the other compositions increasing further by time point 60 min. At time point 10 min, the other commercial multipurpose oil, CRC 5-56, presented far better penetration test result compared to WD-40. For all other tested compositions, including the multipurpose oils #5, #12, #13, and #14 according to the present disclosure, the penetration test result at 10 min was at least as good as for CRC 5-56. The test was continued to simulate an extended exposure or treatment time. At 60 min, all tested compositions exhibited a further improvement in the penetration test. However, this time both commercial multipurpose oil products presented inferior results compared to the other compositions. For CRC 5-56 the penetration test result at 60 min was 1.35x of the test result at 10 min, while for the multipurpose oils #5, #12, #13, and #14 according to the present disclosure the penetration test result at 60 min was 1.58x, 1.59x, 1.50x, and 1.44x of the corresponding test result at 10 min, respectively. In other words, the multipurpose oils according to the present disclosure have at least as good penetration performance as CRC 5-56 at 10 min, but outperform CRC 5-56 in penetration performance upon prolonged treatment time. Compared to WD-40, the present multipurpose oils reached at least as good penetration performance already at 10 min, than what was reached by WD-40 after 60 min waiting. Without wishing to be bound to any theory it is believed that the penetration performance of the commercial products is limited at least in part by their higher volatility, as expressed by Noack100, causing too quick drying. Another contributor is believed to be the lower surface tension of the major component in the present multipurpose oil (renewable hydrocarbon base stock: about 27 mN/m, ASTM D971M), as compared to that of WD-40 (about 31 mN/m).

### Example 3.4 - Stability

Stability of the compositions were tested for a four week test period at 25 °C representing storage at room temperature, and at 4 °C representing storage at cold environment. After the four week test period the studied samples were inspected visually. The test results are presented in Table 3.4.

**Table 3.4. Stability test results after a four week storage at 25 °C or at 4 °C, as observed by a visual inspection.**

| Sample | 25 °C | 4 °C |
|---|---|---|
| #1 WD-40 | slightly cloudy from the bottom | ¼ of liquid height cloudy from the bottom |
| #2 CRC 5-56 | no changes | no changes |
| #3 Renewable hydrocarbon base stock as neat | no changes | no changes |
| #5 multipurpose oil | no changes | slight sedimentation at the bottom |
| #12 multipurpose oil | no changes | slight sedimentation at the bottom |
| #13 multipurpose oil | no changes | slight sedimentation at the bottom |
| #14 multipurpose oil | no changes | slight sedimentation at the bottom |
| #4 comparison composition | no changes | no changes |
| #6 comparison composition | no changes | no changes |
| #7 comparison composition | no changes | no changes |
| #8 comparison composition | no changes | no changes |
| #9 comparison composition | no changes | no changes |
| #10 comparison composition | no changes | no changes |
| #11 comparison composition | no changes | no changes |

All changes observed occurred during the first week and remained similar until the end of the four week test period. At room temperature just the commercial multipurpose oil product WD-40 showed changed appearance, namely slight cloudiness. As room temperature is possibly the most typical condition where multipurpose oil is used, particularly as an aerosol, turning cloudy already at room temperature is undesired due to increased risk of blocked nozzles, uneven/nonhomogeneous spray, and leaving deposits on the treated surface. Storage at cold environment caused increased cloudiness of WD-40, and slight sedimentation of the multipurpose oils #5, #12, #13, and #14 according to the present disclosure. However, none of these changes were permanent, and the original appearance could be recovered by returning to room temperature and/or shaking.

To simulate occasional storage at minus degrees a further stability test was conducted by storing the samples at -18 °C for a four week test period. Almost all of the samples showed changes in the appearance, however none of these were permanent but the original appearance could be recovered by returning the samples to room temperature and by shaking.

Based on the stability test, it can be concluded that the multipurpose oil compositions according to the present disclosure can be stored and used at room temperature without limitations, and that after storing or before using at cold temperature, merely shaking may be needed.

### Example 3.5 - Rust removal by rubbing

Rust removal performance of compositions #1 to #14 were tested by rubbing salt spray treated steel plates, followed by visual inspection. DC01 grade oiled cold-rolled steel plates (100x70mm) were cleaned with acetone, and subjected to salt spray in a test chamber for one hour to obtain desired level of rusting. One milliliter of the commercial reference product WD-40 or CRC 5-56, the renewable hydrocarbon base stock as neat, multipurpose oil according to the present disclosure, or comparison composition to be examined was spread over the rusted steel plate and left to affect on the surface for one minute. After that, rust removal was done by rubbing the steel plate for ten seconds from the other half of the plate with a cotton pad dipped in the respective test oil. After the rubbing, the treated steel plates were inspected visually, comparing the appearance of the rubbed half to the unrubbed half.

For each tested composition the appearance of the rubbed half was less rusty compared to the unrubbed half. Based on the results of this test it can be concluded that the multipurpose oil compositions according to the present disclosure are effective for rust removal by rubbing, and that this effectiveness is at least as good as provided by the commercial reference products WD-40 or CRC 5-56, the renewable hydrocarbon base stock as neat, and the comparison compositions, and also extendable to dirt, tar and/or grease removal by rubbing, since these are generally easier to be rubbed away compared to rust.

### EXAMPLE 4 - Advanced performance tests

Two experiments were conducted to study anticorrosion performance at high humidity, and water displacement performance. The tested compositions included two multipurpose oils #15 and #16 according to the present disclosure, commercial references WD-40 and CRC 5-56, and two comparison compositions #8 and #11.

### Example 4.1 - Anticorrosion at high humidity

Anticorrosion performance at high humidity conditions were tested according to ASTM D1748-10:2015. This test is harsh (Humidity Cabinet Test at 49 °C for 100 hours) with a strict pass / fail criteria. DC01 grade oiled cold-rolled steel plates (100x70mm) were cleaned and treated with the compositions to be examined similarly as in Example 3.2., and then tested and visually evaluated using the ASTM D1748-10:2015 method. For the failed samples, a further description was recorded based on the visual inspection. The test results are presented in Table 4.1.

**Table 4.1. Anticorrosion at high humidity according to ASTM D1748-10:2015 with pass/fail result and a further description.**

| Sample | Pass/fail | Further description in case of fail, based on visual inspection |
|---|---|---|
| | ASTM D1748-10:2015 | |
| Control, no oil treatment | fail | typical failure with rust occurring all over the steel plate |
| #1 WD-40 | pass | - |
| #2 CRC 5-56 | fail | slight tarnish |
| #8 comparison composition | fail | clear rusting |
| #11 comparison composition | fail | clear rusting |
| #15 multipurpose oil | pass | - |
| #16 multipurpose oil | fail | minor rusting |

From Table 4.1 it can be seen that merely the commercial multipurpose oil WD-40 and the multipurpose oil #15 according to the present disclosure reached pass criteria in the harsh anticorrosion test according to ASTM D1748-10:2015. The further descriptions based on visual inspection reveal, that the commercial multipurpose oil CRC 5-56 and the multipurpose oil #16 according to the present disclosure, i.e. similar to #15 but containing less of the anionic surfactant composition and additionally containing a fatty acid ester based lubricant, were close to pass, presenting just slight tarnish or minor rusting, respectively. Comparison compositions #8, comprising renewable hydrocarbon base stock and a fatty acid ester based lubricant, and #11, similar to #8 but additionally containing a hydrocarbon-based rust inhibitor, presented clear rusting. Surprisingly, the multipurpose oils #15 and #16 according to the present disclosure provided significantly better protection against rusting under the harsh test conditions of ASTM D1748-10:2015 compared to the otherwise similar composition #11 containing a hydrocarbon-based rust inhibitor, i.e. a component specifically intended for rust inhibition, instead of the anionic surfactant composition. Also this finding supports the conclusion that the renewable hydrocarbon base stock and the anionic surfactant composition have a surprising synergistic effect.

### Example 4.2 - Water displacement

Water displacement performance at humid conditions were tested according to FTM 3007 method (FED-STD-791 Method 3007). This test is harsh (Humidity Cabinet for one hour) with a strict pass / fail criteria. The ability of a lubricant to protect metals from rust is usually evaluated by coating dry panels with the test sample. But in many real world applications, there is moisture in the system prior to lubrication, such as when a system containing hard to reach crevices needs to be re-lubricated. This test is intended to measure rust inhibition properties in systems where new oil is being applied to areas where moisture is already present.

Steel plates were sand blasted, and cleaned. Then the steel plates were dipped into water and thereafter into the composition to be examined (except control plate). All steel plates were put into a constant humidity chamber for one hour and then visually evaluated using a strict pass / fail criteria. For the failed samples, a further description was recorded based on a visual inspection. The test results are presented in Table 4.2.

**Table 4.2. Water displacement according to FTM-3007 with pass/fail result and a further description.**

| Sample | Pass/fail | Further description in case of fail, based on visual inspection |
|---|---|---|
| | FTM-3007 | |
| Control, no oil treatment | fail | typical failure with rust occurring, indicating presence of water still on the steel plate |
| #1 WD-40 | pass | - |
| #2 CRC 5-56 | fail | rust clearly shown along the bottom of the steel plate |
| #8 comparison composition | fail | clear rusting, similar to the control steel plate |
| #11 comparison composition | fail | small changes in the surface of the steel plate |
| #15 multipurpose oil | pass | - |
| #16 multipurpose oil | fail | a slight, hardly recognizable change in the surface of the steel plate |

From Table 4.2 it can be seen that merely the commercial multipurpose oil WD-40 and the multipurpose oil #15 according to the present disclosure reached pass criteria in the harsh water displacement test according to FTM-3007. The further descriptions based on visual inspection reveal that the multipurpose oil #16 according to the present disclosure, i.e. similar to #15 but containing less of the anionic surfactant composition and additionally containing a fatty acid ester based lubricant, was close to pass, presenting just slight, hardly recognizable change in the surface of the steel plate. Comparison composition #8, comprising renewable hydrocarbon base stock and a fatty acid ester based lubricant, and the commercial multipurpose oil CRC 5-56 presented clear rusting: CRC 5-56 along the bottom of the steel plate and #8 all over the steel plate. Comparison composition #11, similar to #8 but additionally containing a hydrocarbon-based rust inhibitor, presented just small changes in the surface of the steel plate. Surprisingly, the multipurpose oils #15 and #16 according to the present disclosure had better water displacement behavior under the harsh test conditions of FTM-3007 compared to the commercial multipurpose oil CRC 5-56. In other words, the multipurpose oils according to the present disclosure appear to perform better in real world situations where the multipurpose oil is being applied to areas where moisture is already present, compared to CRC 5-56.

Various embodiments have been presented. It should be appreciated that in this document, words comprise, include and contain are each used as open-ended expressions with no intended exclusivity.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A multipurpose oil comprising, based on the total volume of the multipurpose oil,
80.0-99.5 vol-%, preferably 85.0-99.0 vol-%, more preferably 87.0-98.5 vol-% of a renewable hydrocarbon base stock, and
0.5-20.0 vol-%, preferably 1.0-15.0 vol-%, more preferably 1.5-13.0 vol-% of an anionic surfactant composition, preferably comprising at least one or more aromatic anionic surfactant(s),
wherein the renewable hydrocarbon base stock comprises, based on the total weight of the renewable hydrocarbon base stock, more than 50 wt-% of C14-C20 hydrocarbons and at least 90 wt-% of paraffins, of which paraffins at least 70 wt-% are isoparaffins, and
wherein the renewable hydrocarbon base stock has a biogenic carbon content of more than 80 wt-%, based on the total weight of carbon in the hydrocarbon base stock (EN 16640 (2017)).

2. The multipurpose oil according to claim 1, wherein the renewable hydrocarbon base stock comprises, based on the total weight of the renewable hydrocarbon base stock, at least 60 wt-% or at least 70 wt-%, preferably at least 80 wt-%, more preferably at least 85 wt-%, even more preferably at least 90 wt-% of C14-C20 hydrocarbons, and/or wherein the renewable hydrocarbon base stock comprises, based on the total weight of the renewable hydrocarbon base stock, at most 20 wt-%, preferably at most 15 wt-%, more preferably at most 12 wt-% of <C14 hydrocarbons, and/or at most 5.0 wt-%, preferably at most 4.0 wt-%, more preferably at most 3.0 wt-% of >C20 hydrocarbons.

3. The multipurpose oil according to any of the preceding claims, wherein the renewable hydrocarbon base stock has a T5 temperature (5 vol-% recovered) within a range from 170 to 280 °C, preferably from 220 to 260 °C, and a T95 temperature within a range from 250 to 340 °C, preferably from 270 to 320 °C, according to EN ISO 3405-2019, and/or a difference between T95 and T5 temperatures within a range from 40 to 100 °C, preferably from 40°C to 80 °C, and/or wherein the renewable hydrocarbon base stock has a ratio of the difference between T50 and T5 temperatures to the difference between T95 and T50 temperatures (T50-T5)/(T95-T50) within a range from 1.0 to 7.0, preferably within a range from 1.5 to 6.0.

4. The multipurpose oil according to any of the preceding claims, wherein the renewable hydrocarbon base stock comprises, based on the total weight of the renewable hydrocarbon base stock, at least 95 wt-%, preferably at least 97 wt-% of paraffins, and preferably of the paraffins at least 75 wt-%, more preferably at least 80 wt-%, even more preferably at least 85 wt-%, further more preferably at least 90 wt-%, most preferably at least 93 wt-% are isoparaffins.

5. The multipurpose oil according to any of the preceding claims, wherein the renewable hydrocarbon base stock comprises, based on the total weight of paraffins in the renewable hydrocarbon base stock, at least 30 wt-%, preferably at least 40 wt-%, more preferably at least 45 wt-% of multiple-branched isoparaffins.

6. The multipurpose oil according to any of the preceding claims, wherein the renewable hydrocarbon base stock is classified as readily biodegradable according to OECD Test Guideline 301 B.

7. The multipurpose oil according to any of the preceding claims, wherein the anionic surfactant composition comprises at least one or more anionic surfactant(s) selected from aromatic sulfonate(s), aromatic carboxylate(s), aromatic sulfate(s), and/or aromatic phosphate(s), more preferably from at least one or more anionic surfactant(s) selected from aryl and/or alkaryl sulfonate(s), aryl and/or alkaryl carboxylate(s), aryl and/or alkaryl sulfate(s), aryl and/or alkaryl phosphate(s), phenate(s), and/or salicylate(s), more preferably at least one or more anionic surfactant selected from aryl and/or alkaryl sulfonate(s), even more preferably at least one or more of alkaryl sulfonate(s), wherein the alkaryl preferably is aryl substituted with one or two alkyl group(s), preferably one or two C4-C32-alkyl group(s).

8. The multipurpose oil according to any of the preceding claims, wherein the anionic surfactant composition comprises at least one or more anionic surfactant salt(s) selected from calcium, magnesium, barium, sodium, potassium, and/or lithium salt(s), preferably at least one or more anionic surfactant salt(s) selected from magnesium, and/or calcium salt(s), more preferably at least one or more anionic surfactant salt(s) selected from calcium salt(s).

9. The multipurpose oil according to any of the preceding claims, wherein the anionic surfactant composition comprises at least one or more anionic surfactant(s) selected from calcium, and/or magnesium salt(s) of aryl and/or alkaryl sulfonate(s), preferably at least one or more anionic surfactant(s) selected from calcium, and/or magnesium salt(s) of alkaryl sulfonate(s), more preferably one or more anionic surfactant(s) selected from calcium salt(s) of alkaryl sulfonate(s), most preferably at least one or more anionic surfactant(s) selected from calcium salt(s) of alkyl benzene sulfonate(s), and/or calcium salt(s) of alkyl naphthalene sulfonate(s).

10. The multipurpose oil according to any of the preceding claims, further comprising, based on the total volume of the multipurpose oil, 1.0-15.0 vol-%, preferably 1.0-12.0 vol-% of a lubricant oil, wherein the lubricant oil comprises renewable ester based lubricant(s).

11. The multipurpose oil according to any of the preceding claims, comprising, based on the total volume of the multipurpose oil,
80.0-99.5 vol-%, preferably 85.0-99.0 vol-%, more preferably 87.0-98.5 vol-% of the renewable hydrocarbon base stock;
0.5-20.0 vol-%, preferably 1.0-15.0 vol-%, more preferably 1.5-13.0 vol-% of the anionic surfactant composition;
optionally 1.0-15.0 vol-%, preferably 1.0-12.0 vol-% of a lubricant oil;
optionally 0.001-5.0 vol-%, preferably 0.1-5.0 vol-% of a dry lubricity additive;
optionally 0.0001-5.0 vol-%, preferably 0.001-3.0 vol-% of one or more further additive(s) in total;
wherein the sum amount of the renewable hydrocarbon base stock, the anionic surfactant composition, the optional lubricant oil, the optional dry lubricity additive, and the optional further additive(s) is 100.0 vol-%.

12. The multipurpose oil according to any of the preceding claims formulated to an aerosol product with a propellant in a volume ratio within a range from 1:99 to 10:90, preferably from 2:98 to 7:93, of the propellant to the multipurpose oil, wherein the propellant preferably comprises at least one or more of CO₂, air, N₂, propane, and/or butane, more preferably at least one or more of CO₂, air, and/or N₂, most preferably CO₂.

13. A method for producing a multipurpose oil according to any one of claims 1 to 12 comprising:
mixing a renewable hydrocarbon base stock having a biogenic carbon content of more than 80 wt-%, based on the total weight of carbon in the hydrocarbon base stock (EN 16640 (2017)), and comprising, based on the total weight of the renewable hydrocarbon base stock, more than 50 wt-% of C14-C20 hydrocarbons and at least 90 wt-% of paraffins, of which paraffins at least 70 wt-% are isoparaffins; and an anionic surfactant composition, preferably comprising at least one or more anionic aromatic surfactant(s); to form a multipurpose oil comprising, based on the total volume of the multipurpose oil, 80.0-99.5 vol-%, preferably 85.0-99.0 vol-%, more preferably 87.0-98.5 vol-% of the renewable hydrocarbon base stock, and 0.5-20.0 vol-%, preferably 1.0-15.0 vol-%, more preferably 1.5-13.0 vol-% of the anionic surfactant composition.

14. The method according to claim 13, further comprising incorporating at least one or more of a lubricant oil, a dry lubricity additive, and/or one or more further additive(s) to form a multipurpose oil comprising, when the respective component is incorporated, 1.0-15.0 vol-%, preferably 1.0-12.0 vol-% of the lubricant oil; 0.001-5.0 vol-%, preferably 0.1-5.0 vol-% of the dry lubricity additive; and/or 0.0001-5.0 vol-%, preferably 0.001-3.0 vol-% of the further additive(s) in total, based on the total volume of the multipurpose oil; wherein the sum amount of the renewable hydrocarbon base stock, the anionic surfactant composition, and the at least one or more dry lubricity additive, lubricant oil, and/or further additives is 100.0 vol-%.

15. The method according to claim 13 or 14, further comprising formulating the multipurpose oil with a propellant in a volume ratio within a range from 1:99 to 10:90, preferably from 2:98 to 7:93, of the propellant to the multipurpose oil, to form an aerosol product of the multipurpose oil.

16. The method according to any one of claims 13 to 15, wherein the renewable hydrocarbon base stock is as further defined in any one of claims 2 to 8, and/or the anionic surfactant composition is as further defined in any one of claims 9 to 11.

17. Use of a multipurpose oil according to any one of claims 1 to 12, or obtainable by a method according to any one of claims 13 to 16, for at least two or more, preferably three or more, of anticorrosion, penetration, lubrication, water displacement, and/or for cleaning, said cleaning preferably comprising at least one or more of rust removal, dirt removal, tar removal, and/or degreasing.

## Patentansprüche

1. Mehrzwecköl umfassend 80,0-99,5 Vol-%, bevorzugt 85,0-99,0 Vol-%, mehr bevorzugt 87,0-98,5 Vol-% bezogen auf das
Gesamtvolumen des Mehrzwecköls, eines erneuerbaren Kohlenwasserstoffgrundstoffs, und
0,5-20,0 Vol-%, bevorzugt 1,0-15,0 Vol-%, mehr bevorzugt 1,5-13,0 Vol.-% einer anionischen Tensidzusammensetzung, die bevorzugt mindestens ein oder mehrere aromatische(s) anionische(s) Tensid(e) umfasst,
wobei der erneuerbare Kohlenwasserstoffgrundstoff, bezogen auf das Gesamtgewicht des erneuerbaren Kohlenwasserstoffgrundstoffs, mehr als 50 Gew.-% C14-C20Kohlenwasserstoffe und mindestens 90 Gew.-% Paraffine umfasst, von welchen Paraffinen mindestens 70 Gew.-% Isoparaffine sind, und
wobei der erneuerbare Kohlenwasserstoffgrundstoff einen Biogenkohlenstoffgehalt von mehr als 80 Gew.-%, bezogen auf das Gesamtgewicht des Kohlenstoffs im Kohlenwasserstoffgrundstoff, aufweist (EN 16640 (2017)).

2. Mehrzwecköl nach Anspruch 1, wobei der erneuerbare Kohlenwasserstoffgrundstoff, bezogen auf das Gesamtgewicht des erneuerbaren Kohlenwasserstoffgrundstoffs, mindestens 60 Gew.-% oder mindestens 70 Gew.-%, bevorzugt mindestens 80 Gew.-%, mehr bevorzugt mindestens 85 Gew.-%, noch mehr bevorzugt mindestens 90 Gew.-% C14-C20 Kohlenwasserstoffe umfasst, und/oder wobei der erneuerbare Kohlenwasserstoffgrundstoff, bezogen auf das Gesamtgewicht des erneuerbaren Kohlenwasserstoffgrundstoffs, höchstens 20 Gew.-%, bevorzugt höchstens 15 Gew.-%, mehr bevorzugt höchstens 12 Gew.-% von <C14-Kohlenwasserstoffen, und/oder höchstens 5,0 Gew.-%, bevorzugt höchstens 4,0 Gew.-%, mehr bevorzugt höchstens 3,0 Gew.-% an >C20-Kohlenwasserstoffen umfasst.

3. Mehrzwecköl nach einem der vorhergehenden Ansprüche, wobei der erneuerbare Kohlenwasserstoffgrundstoff eine T5-Temperatur (5 Vol.-% zurückgewonnen) in einem Bereich von 170 bis 280 °C, bevorzugt von 220 bis 260 °C, und eine T95-Temperatur in einem Bereich von 250 bis 340 °C, bevorzugt von 270 bis 320 °C, gemäß EN ISO 3405-2019, und/oder eine Differenz zwischen T95- und T5-Temperaturen in einem Bereich von 40 bis 100 °C, bevorzugt von 40 °C bis 80 °C aufweist, und/oder wobei der erneuerbare Kohlenwasserstoffgrundstoff ein Verhältnis von der Differenz zwischen T50- und T5-Temperaturen zu der Differenz zwischen T95- und T50 Temperaturen (T50-T5)/(T95-T50) in einem Bereich von 1,0 bis 7,0, bevorzugt innerhalb eines Bereichs von 1,5 bis 6,0 aufweist.

4. Mehrzwecköl nach einem der vorhergehenden Ansprüche, wobei der erneuerbare Kohlenwasserstoffgrundstoff, bezogen auf das Gesamtgewicht des erneuerbaren Kohlenwasserstoffgrundstoffs, mindestens 95 Gew.-%, bevorzugt mindestens 97 Gew.-%, Paraffine und bevorzugt von den Paraffinen mindestens 75 Gew.-%, mehr bevorzugt mindestens 80 Gew.-%, noch mehr bevorzugt mindestens 85 Gew.-%, ferner mehr bevorzugt mindestens 90 Gew.-%, am meisten bevorzugt mindestens 93 Gew.-% Isoparaffine, umfasst.

5. Mehrzwecköl nach einem der vorhergehenden Ansprüche, wobei der erneuerbare Kohlenwasserstoffgrundstoff, bezogen auf das Gesamtgewicht der Paraffine in dem erneuerbaren Kohlenwasserstoffgrundstoff, mindestens 30 Gew.-%, bevorzugt mindestens 40 Gew.-%, mehr bevorzugt mindestens 45 Gew.-% von mehrfach-verzweigtem Isoparaffin umfasst.

6. Mehrzwecköl nach einem der vorhergehenden Ansprüche, wobei der erneuerbare Kohlenwasserstoffgrundstoff als leicht biologisch abbaubar gemäß OECD-Test Guideline 301 B eingestuft ist.

7. Mehrzwecköl nach einem der vorhergehenden Ansprüche, wobei die anionische Tensidzusammensetzung mindestens ein oder mehrere anionische(s) Tensid(e), ausgewählt aus aromatischem(n) Sulfonat(en), aromatischem(n) Carboxylat(en), aromatischem(n) Sulfat(en) und/oder aromatischem(n) Phosphat(en), mehr bevorzugt aus mindestens einem oder mehreren anionischen Tensid(en), ausgewählt aus Aryl- und/oder Alkarylsulfonat(en), Aryl- und/oder Alkarylcarboxylat(en), Aryl- und/oder Alkarylsulfat(en), Aryl- und/oder Alkarylphosphat(en), Phenat(en) und/oder Salicylat(en), mehr bevorzugt mindestens ein oder mehrere anionische(s) Tensid(e), ausgewählt aus Aryl- und/oder Alkarylsulfonat(en), noch mehr bevorzugt mindestens ein oder mehrere Alkarylsulfonat(e), wobei das Alkaryl bevorzugt Aryl ist, das mit einer oder zwei Alkylgruppe(n), bevorzugt einer oder zwei C4-C32-Alkylgruppe(n), substituiert ist, umfasst.

8. Mehrzwecköl nach einem der vorhergehenden Ansprüche, wobei die anionische Tensidzusammensetzung mindestens ein oder mehrere anionische(s) Tensidsalz(e), ausgewählt aus Calcium-, Magnesium-, Barium-, Natrium-, Kalium- und/oder Lithiumsalz(en), bevorzugt mindestens ein oder mehrere anionische(s) Tensidsalz(e), ausgewählt aus Magnesium- und/oder Calcium Salz(en), mehr bevorzugt mindestens ein oder mehrere anionische(s) Tensidsalz(e), ausgewählt aus Calcium Salz(en), umfasst.

9. Mehrzwecköl nach einem der vorhergehenden Ansprüche, wobei die anionische Tensidzusammensetzung mindestens ein oder mehrere anionische(s) Tensid(e), ausgewählt aus Calcium- und/oder Magnesiumsalz(en) von Aryl- und/oder Alkarylsulfonat(en), bevorzugt mindestens ein oder mehrere anionische(s) Tensid(e), ausgewählt aus Calcium-, und/oder Magnesiumsalz(en) von Alkarylsulfonat(en), mehr bevorzugt mindestens ein oder mehrere anionische(s) Tensid(e), ausgewählt aus Calciumsalz(en) von Alkarylsulfonat(en), am meisten bevorzugt mindestens ein oder mehrere anionische(s) Tensid(e), ausgewählt aus von Calciumsalz(en) von Alkylbenzolsulfonat(en) und/oder Calciumsalz(en) von Alkylnaphthalinsulfonat(en), umfasst.

10. Mehrzwecköl nach einem der vorhergehenden Ansprüche, ferner umfassend, bezogen auf das Gesamtvolumen des Mehrzwecköls, 1,0-15,0 Vol-%, bevorzugt 1,0-12,0 Vol-% eines Schmieröls, wobei das Schmieröl auf erneuerbarem Ester basierte(s) Schmiermittel umfasst.

11. Mehrzwecköl nach einem der vorhergehenden Ansprüche, umfassend, bezogen auf das Gesamtvolumen des Mehrzwecköls,
80,0-99,5 Vol-%, bevorzugt 85,0-99,0 Vol-%, mehr bevorzugt 87,0-98,5 Vol-% des erneuerbaren Kohlenwasserstoffgrundstoffs;
0,5-20,0 Vol-%, bevorzugt 1,0-15,0 Vol-%, mehr bevorzugt 1,5-13,0 Vol-% der anionischen Tensidzusammensetzung;
optional 1,0-15,0 Vol-%, bevorzugt 1,0-12,0 Vol.-% eines Schmieröls;
optional 0,001-5,0 Vol.-%, bevorzugt 0,1-5,0 Vol.-% eines Trockenschmiermitteladditivs;
optional 0,0001-5,0 Vol.-%, bevorzugt 0,001-3,0 Vol.-% ein oder mehrerer weiterer Additive insgesamt;
wobei die Gesamtmenge des erneuerbaren Kohlenwasserstoffgrundstoffs, der anionischen Tensidzusammensetzung, des optionalen Schmieröls, des optionalen Trockenschmiermitteladditivs und des optionalen weiteren Additivs/der optionalen weiteren Additive 100,0 Vol-% ist.

12. Mehrzwecköl nach einem der vorhergehenden Ansprüche, formuliert zu einem Aerosolprodukt mit einem Treibmittel in einem Volumenverhältnis in einem Bereich von 1:99 bis 10:90, bevorzugt von 2:98 bis 7:93, des Treibmittels zu dem Mehrzwecköl, wobei das Treibmittel bevorzugt mindestens eines oder mehrere von CO₂, Luft, N₂, Propan und/oder Butan, mehr bevorzugt mindestens eines oder mehrere von CO₂, Luft und/oder N₂, am meisten bevorzugt CO₂, umfasst.

13. Verfahren zur Herstellung eines Mehrzwecköls nach einem der Ansprüche 1 bis 12, umfassend:
Mischen eines erneuerbaren Kohlenwasserstoffgrundstoffs mit einem Biogenkohlenstoffgehalt von mehr als 80 Gew.-%, bezogen auf das Gesamtgewicht des Kohlenstoffs im Kohlenwasserstoffgrundstoff (EN 16640 (2017)), und umfassend, bezogen auf das Gesamtgewicht des erneuerbaren Kohlenwasserstoffgrundstoffs, mehr als 50 Gew.-% C14-C20 Kohlenwasserstoffe und mindestens 90 Gew.-% Paraffine, von welchen Paraffinen mindestens 70 Gew.-% Isoparaffine sind; und eine anionische Tensidzusammensetzung, die bevorzugt mindestens ein oder mehrere anionische(s) aromatische(s) Tensid(e) umfasst; um ein Mehrzwecköl zu bilden, das, bezogen auf das Gesamtvolumen des Mehrzwecköls, 80,0-99,5 Vol-%, bevorzugt 85,0-99,0 Vol-%, mehr bevorzugt 87,0-98,5 Vol-% des erneuerbaren Kohlenwasserstoffgrundstoffs, und 0,5-20,0 Vol-%, bevorzugt 1,0-15,0 Vol-%, mehr bevorzugt 1,5-13,0 Vol-% der anionischen Tensidzusammensetzung, umfasst.

14. Verfahren nach Anspruch 13, ferner umfassend das Einarbeiten mindestens eines oder mehrerer von einem Schmieröl, einem Trockenschmiermitteladditiv und/oder eines oder mehrerer weiteren Additiv(en), um ein Mehrzwecköl zu bilden, das, wenn die jeweilige Komponente eingearbeitet ist, 1,0-15,0 Vol-%, bevorzugt 1,0-12,0 Vol-% des Schmieröls; 0,001-5,0 Vol-%, bevorzugt 0,1-5,0 Vol-% des Trockenschmiermitteladditivs; und/oder 0,0001-5,0 Vol-%, bevorzugt 0,001-3,0 Vol-% des weiteren Additivs/der weiteren Additive insgesamt umfasst, bezogen auf das Gesamtvolumen des Mehrzwecköls; wobei die Gesamtmenge des erneuerbaren Kohlenwasserstoffgrundstoffs, der anionischen Tensidzusammensetzung, und des mindestens einen oder mehreren Trockenschmiermitteladditiv, Schmieröls und/oder weiterer Additive 100,0 Vol-% ist.

15. Verfahren nach Anspruch 13 oder 14, ferner umfassend Formulieren des Mehrzwecköls mit einem Treibmittel in einem Volumenverhältnis im Bereich von 1:99 bis 10:90, bevorzugt von 2:98 bis 7:93, des Treibmittels zu dem Mehrzwecköl, um ein Aerosolprodukt des Mehrzwecköls zu bilden.

16. Verfahren nach einem der Ansprüche 13 bis 15, wobei der erneuerbare Kohlenwasserstoffgrundstoff wie in einem der Ansprüche 2 bis 8 weiter definiert ist und/oder die anionische Tensidzusammensetzung wie in einem der Ansprüche 9 bis 11 weiter definiert ist.

17. Verwendung eines Mehrzwecköls nach einem der Ansprüche 1 bis 12 oder erhältlich durch ein Verfahren nach einem der Ansprüche 13 bis 16 für mindestens zwei oder mehr, bevorzugt drei oder mehr, von Korrosionsschutz, Penetration, Schmierung, Wasserverdrängung und/oder zur Reinigung, besagte Reinigung bevorzugt mindestens eines oder mehrere von Rostentfernung, Schmutzentfernung, Teerentfernung und/oder Entfettung umfassend.

## Revendications

1. Huile polyvalente comprenant, sur la base du volume total de l'huile polyvalente, 80,0 à 99,5 % en volume, préférentiellement 85,0 à 99,0 % en volume, plus préférentiellement 87,0 à 98,5 % en volume d'un stock de base d'hydrocarbures renouvelables, et
0,5 à 20,0 % en volume, préférentiellement 1,0 à 15,0 % en volume, plus préférentiellement 1,5 à 13,0 % en volume d'une composition de tensioactifs anioniques, comprenant préférentiellement au moins un ou plusieurs tensioactif(s) anionique(s) aromatique(s),
dans lequel le stock de base d'hydrocarbures renouvelables comprend, sur la base du poids total du stock de base d'hydrocarbures renouvelables, plus de 50 % en poids d'hydrocarbures en C14 à C20 et au moins 90 % en poids de paraffines, dont au moins 70 % en poids sont des isoparaffines, et
dans lequel le stock de base d'hydrocarbures renouvelables a une teneur en carbone biogène de plus de 80 % en poids, sur la base du poids total du carbone dans le stock de base d'hydrocarbure de base (EN 16640 (2017)).

2. Huile polyvalente selon la revendication 1, dans le stock de base d'hydrocarbures renouvelables comprend, sur la base du poids total du stock de base d'hydrocarbures renouvelables, au moins 60 % en poids ou au moins 70 % en poids, préférentiellement au moins 80 % en poids, plus préférentiellement au moins 85 % en poids, encore plus préférentiellement au moins 90 % en poids d'hydrocarbures en C14 à C20, et/ou dans lequel le stock de base d'hydrocarbures renouvelables comprend, sur la base du poids total du stock de base d'hydrocarbures renouvelables, au plus 20 % en poids, préférentiellement au plus 15 % en poids, plus préférentiellement au plus 12 % en poids d'hydrocarbures en <C14, et/ou au plus 5,0 % en poids, préférentiellement au plus 4,0 % en poids, plus préférentiellement au plus 3,0 % en poids d'hydrocarbures >C20.

3. L'huile polyvalente selon l'une quelconque des revendications précédentes, dans laquelle le stock de base d'hydrocarbures renouvelables a une température T5 (5 % en volume récupérés) comprise la plage allant de170 à 280 °C, préférentiellement de 220 à 260 °C, et une température T95 comprise dans la plage allant de 250 à 340 °C, préférentiellement de 270 à 320 °C, conformément à la norme EN ISO 3405-2019, et/ou une différence entre les températures T95 et T5 est comprise dans la plage allant de 40 à 100 °C, préférentiellement de 40 à 80 °C, et/ou dans lequel le stock de base d'hydrocarbures renouvelables présente un rapport entre la différence entre les températures T50 et T5 et la différence entre les températures T95 et T50 (T50-T5)/(T95-T50) compris dans la plage allant de 1,0 à 7,0, préférentiellement de 1,5 à 6,0.

4. Huile polyvalente selon l'une quelconque des revendications précédentes, dans laquelle le stock de base d'hydrocarbures renouvelables comprend, sur la base du poids total du stock de base d'hydrocarbures renouvelables, au moins 95 % en poids, préférentiellement au moins 97 % en poids de paraffines, et préférentiellement au moins 75 % en poids de paraffines, plus préférentiellement au moins 80 % en poids, plus préférentiellement encore au moins 85 % en poids, encore plus préférentiellement au moins 90 % en poids, au plus préférentiellement au moins 93 % en poids d'isoparaffines.

5. Huile polyvalente selon l'une quelconque des revendications précédentes, dans laquelle le stock de base d'hydrocarbures renouvelables comprend, sur la base du poids total de paraffines dans le stock de base d'hydrocarbures renouvelables, au moins 30 % en poids, préférentiellement au moins 40 % en poids, plus préférentiellement au moins 45 % en poids d'isoparaffines à ramifications multiples.

6. Huile polyvalente selon l'une quelconque des revendications précédentes, dans laquelle le stock de base d'hydrocarbures renouvelables est classé comme facilement biodégradable selon la ligne directrice 301 B de l'OCDE. hydrocarbures renouvelables est classée comme facilement biodégradable selon la méthode d'essai de la ligne directrice 301 B de l'OCDE.

7. Huile polyvalente selon l'une quelconque des revendications précédentes, dans laquelle la composition de tensioactifs anioniques comprend au moins un ou plusieurs tensioactif(s) anionique(s) choisi(s) parmi les sulfonates aromatiques, les carboxylates aromatiques, les sulfates aromatiques et/ou les phosphates aromatiques, plus préférentiellement parmi au moins ou plus agent(s) de surface anionique(s) choisi parmi les sulfonate(s) d'aryle et/ou d'alkyle, les carboxylate(s) d'aryle et/ou d'alkyle, les sulfate(s) d'aryle et/ou d'alkyle, les phosphate(s) d'aryle et/ou d'alkyle, les phénate(s), et/ou les salicylate(s), plus préférentiellement au moins un ou plusieurs agents de surface anioniques choisis parmi les sulfonates d'aryle et/ou d'alcaryle, encore plus préférentiellement au moins un ou plus sulfonate(s) d'alcaryle, dans laquelle l'alcaryle est préférentiellement un aryle substitué par un ou deux groupes alkyle, préférentiellement un ou deux groupe(s) alkyle en C4 à C32.

8. Huile polyvalente selon l'une quelconque des revendications précédentes, dans laquelle la composition tensioactive anionique comprend au moins un ou plusieurs sel(s) tensioactif(s) anionique(s) choisi(s) parmi les sels de calcium, de magnésium, de baryum, de sodium, de potassium et/ou de lithium, préférentiellement au moins un ou plusieurs sel(s) tensioactif(s) anionique(s) choisi(s) parmi les sels de magnésium et/ou de calcium, plus préférentiellement au moins un ou plusieurs sel(s) tensioactif(s) anionique(s) choisi(s) parmi les sels de calcium.

9. Huile polyvalente selon l'une quelconque des revendications précédentes, dans laquelle la composition de tensioactifs anioniques comprend au moins un ou plusieurs tensioactif(s) anionique(s) sélectionné(s) parmi les sel(s) de calcium, et/ou de magnésium, de sulfonate(s) d'aryle et/ou d'alcaryle, préférentiellement au moins un ou plusieurs tensioactif(s) anionique(s) choisis parmi les sels de calcium et/ou de magnésium de sulfonate(s) d'alcaryle, plus préférentiellement un ou plusieurs tensioactif(s) anionique(s) choisis parmi le(s) sel(s) de calcium de sulfonate(s) d'alkyle, au plus préférentiellement au moins un ou plusieurs tensioactif(s) anionique(s) choisi(s) parmi les sels de calcium de sulfonate(s) d'alkyle benzène, et/ou les sels de calcium de sulfonate(s) d'alkyle naphtalène.

10. Huile polyvalente selon l'une quelconque des revendications précédentes, comprenant en outre, sur la base du volume total de l'huile polyvalente, 1,0 à 15,0 % en volume, préférentiellement 1,0 à 12,0 % en volume d'une huile lubrifiante, dans laquelle l'huile lubrifiante comprend du ou des lubrifiant(s) à base d'ester renouvelable.

11. L'huile polyvalente selon l'une quelconque des revendications précédentes, comprenant, sur la base du volume total de l'huile polyvalente,
80,0 à 99,5 % en volume, préférentiellement 85,0 à 99,0 % en volume, plus préférentiellement 87,0 à 98,5 % en volume du stock de base d'hydrocarbures renouvelables ;
0,5 à 20,0 % en volume, préférentiellement 1,0 à 15,0 % en volume, plus préférentiellement 1,5 à 13,0 % en volume de la composition de tensioactifs anioniques ;
éventuellement 1,0 à 15,0 % en volume, préférentiellement 1,0 à 12,0 % en volume d'une huile lubrifiante ;
éventuellement 0,001 à 5,0 % en volume, préférentiellement 0,1 à 5,0 % en volume d'un additif lubrifiant sec ;
éventuellement 0,0001 à 5,0 % en volume, préférentiellement 0,001 à 3,0 % en volume d'un ou de plusieurs autre(s) additif(s) au total ;
dans lequel la somme du stock de base d'hydrocarbures renouvelables, de la composition tensioactive anionique, de l'huile lubrifiante éventuelle, de l'additif de lubrifiant sec éventuel et du ou des autres additifs éventuels est de 100,0 % en volume.

12. L'huile polyvalente selon l'une des revendications précédentes formulée en un produit aérosol avec un agent propulseur dans un rapport volumétrique compris dans une plage allant de 1:99 à 10:90, préférentiellement de 2:98 à 7:93, entre l'agent propulseur et l'huile polyvalente, dans laquelle l'agent propulseur comprend préférentiellement au moins un ou plusieurs éléments parmi le CO2, l'air, le N2, le propane et/ou le butane, plus préférentiellement au moins un ou plusieurs éléments parmi le CO2, l'air et/ou le N2, au plus préférentiellement le CO2.

13. Méthode de production d'une huile polyvalente selon l'une des revendications 1 à 12, comprenant l'étape de :
mélanger un stock de base d'hydrocarbures renouvelables ayant une teneur en carbone biogène de plus de 80 % en poids, sur la base du poids total de carbone dans le stock de base d'hydrocarbures (EN 16640 (2017)), et comprenant, sur la base du poids total du stock de base d'hydrocarbures renouvelables, plus de 50 % en poids d'hydrocarbures en C14 à C20 et au moins 90 % en poids de paraffines, dont au moins 70 % en poids d'isoparaffines ; et une composition tensioactive anionique, préférentiellement comprenant au moins un ou plusieurs tensioactif(s) anionique(s) aromatique(s) ; pour former une huile polyvalente comprenant, sur la base du volume total de l'huile polyvalente, 80,0 à 99,5 % en volume, préférentiellement 85,0 à 99,0 % en volume, plus préférentiellement 87,0 à 98,5 % en volume du stock de base d'hydrocarbures renouvelables, et 0,5 à 20,0 % en volume, préférentiellement 1,0 à 15,0 % en volume, plus préférentiellement 1,5 à 13,0 % en volume de la composition tensioactive anionique.

14. Méthode selon la revendication 13, comprenant en outre l'étape d'incorporer au moins un ou plusieurs éléments choisi(s) parmi une huile lubrifiante, un additif lubrifiant sec, et/ou un ou plusieurs autre(s) additif(s) pour former une huile polyvalente comprenant, lorsque le composant respectif est incorporé, 1,0 à 15,0 % en volume, préférentiellement 1,0 à 12,0 % en volume de l'huile lubrifiante ; 0,001 à 5,0 % en volume, préférentiellement 0,1 à 5,0 % en volume de l'additif lubrifiant sec ; et/ou 0,0001 à 5,0 % en volume, préférentiellement 0,001 à 3,0 % en volume du ou des autre(s) additif(s) au total, sur la base du volume total de l'huile polyvalente ; dans laquelle la somme des quantités du stock de base d'hydrocarbures renouvelables, de la composition tensioactive anionique et de l'au moins un ou plusieurs élément choisi(s) parmi de l'additif lubrifiants sec, de l'huile lubrifiante et/ou d'autres additifs est de 100,0 % vol.

15. La méthode selon la revendication 13 ou 14, comprenant en outre l'étape de formuler l'huile polyvalente avec un agent propulseur dans un rapport volumétrique compris dans la plage allant de 1:99 à 10:90, préférentiellement de 2:98 à 7:93, entre l'agent propulseur et l'huile polyvalente, pour former un produit aérosol de l'huile polyvalente.

16. Méthode selon l'une quelconque des revendications 13 à 15, dans laquelle le stock de base d'hydrocarbures renouvelables est telle que définie dans l'une quelconque des revendications 2 à 8, et/ou la composition tensioactive anionique est telle que définie dans l'une quelconque des revendications 9 à 11.

17. Utilisation d'une huile polyvalente selon l'une quelconque des revendications 1 à 12, ou pouvant être obtenue par une méthode selon l'une quelconque des revendications 13 à 16, pour au moins deux ou plus, préférentiellement trois ou plus, des applications choisies parmi l'anticorrosion, la pénétration, la lubrification, le déplacement d'eau, et/ou pour le nettoyage, ledit nettoyage comprenant préférentiellement au moins un ou plusieurs des éléments suivants : dérouillage, enlèvement de salissure ou de goudron et/ou dégraissage.
